# EUROPEAN PATENT SPECIFICATION

(11) **EP 4 213 070 B1**
(45) Date of publication and mention of the grant of the patent: **09.09.2026**
(21) Application number: 20955534.1
(22) Date of filing: 29.09.2020
(51) Int. Cl.: G06N 3/063, G06N 3/0464, G06F 17/14, G06F 17/15, G06N 3/0495, G06N 3/084

(54) **NEURAL NETWORK ACCELERATOR, AND ACCELERATION METHOD AND DEVICE**
BESCHLEUNIGER EINES NEURONALEN NETZWERKS SOWIE BESCHLEUNIGUNGSVERFAHREN UND -VORRICHTUNG
ACCÉLÉRATEUR DE RÉSEAU NEURONAL ET PROCÉDÉ ET DISPOSITIF D'ACCÉLÉRATION

(43) Date of publication of application: 19.07.2023
(73) Proprietor: Huawei Technologies Co., Ltd., Shenzhen, Guangdong 518129 (CN)
(72) Inventor: XIN, Chen, Shenzhen, Guangdong 518129 (CN); YUAN, Honghui, Shenzhen, Guangdong 518129 (CN); LEE, Chun Hang, Shenzhen, Guangdong 518129 (CN)
(74) Representative: Maiwald GmbH
(86) International application number: PCT/CN2020/118832
(87) International publication number: WO 2022/067508

(56) References cited:
- CN-A- 109 767 000
- CN-A- 110 533 164
- CN-A- 110 807 513
- US-A1- 2020 019 851
- US-A1- 2020 234 124
- KIM MINSIK ET AL: "Efficient Dilated-Winograd Convolutional Neural Networks", 2019 IEEE INTERNATIONAL CONFERENCE ON IMAGE PROCESSING (ICIP), IEEE, 22 September 2019 (2019-09-22), pages 2711 - 2715, XP033647231, DOI: 10.1109/ICIP.2019.8803277

## Description

### TECHNICAL FIELD

This application relates to the field of neural networks, and in particular, to a neural network accelerator, an acceleration method, and an apparatus.

### BACKGROUND

Artificial intelligence (artificial intelligence, AI) is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perception, inference, and decision-making functions. Researches in the field of artificial intelligence include robotics, natural language processing, computer vision, decision-making and inference, human-computer interaction, recommendation and search, an AI basic theory, and the like.

A neural network belongs to a connectionist school in the field of artificial intelligence, and is a mathematical model that uses a structure similar to a brain nerve synaptic connection to process information. Calculations in the neural network mainly include a convolution operation, an activation operation, a pooling operation, and the like. The convolution operation occupies most time of neural network processing. To obtain a high performance and energy efficiency ratio in a limited area, researchers currently propose a winograd algorithm-based convolution operation mode. In this mode, specific matrix conversion is performed on an input feature map and a weight, so that an equivalent convolution operation task can be completed and multiplication operations in a convolution operation process can be greatly reduced.

However, for an accelerator that currently integrates the winograd algorithm to perform acceleration, core operation modules such as a matrix operation module and a vector operation module in the neural network usually need to be modified much, and a design is complex.

United States patent application US 2020/0234124 A1 describes performing a convolution operation of a neural network based on a Winograd transform.

The article "Efficient Dilated-Winograd Convolutional Neural Networks" by M. Kim et al. (2019 IEEE International Conference on Image Processing) describes using the dilated-Winograd convolution to reduce the computational complexity of the dilated convolution in computer vision algorithms.

### SUMMARY

An embodiment of this application provides a neural network accelerator. The neural network accelerator is based on a winograd algorithm, and may apply the winograd algorithm to a neural network by using a conventional matrix operation module and vector operation module in the neural network. For a convolutional layer or pooling layer whose size is 3×3 (rows × columns) and whose stride is 1, a quantity of multiplication times can be greatly reduced, to improve performance and an energy efficiency ratio of an accelerator.

To achieve the foregoing objective, embodiments of this application provide the following technical solutions.

A first aspect of this application provides a neural network accelerator, including: a preprocessing module, configured to perform first forward winograd transform on a target matrix corresponding to an input feature map, to obtain a transformed target matrix, where performing the first forward winograd transform on the target matrix may be understood as left multiplying the target matrix by a matrix B^{T} and right multiplying the target matrix by a matrix B, to obtain the transformed target matrix, and the preprocessing module is further configured to perform second forward winograd transform on a convolution kernel, to obtain a transformed convolution kernel, where performing the second forward winograd transform on the convolution kernel may be understood as left multiplying the convolution kernel by a matrix G and right multiplying the convolution kernel by a matrix G^{T}, to obtain the transformed convolution kernel; a matrix operation module, configured to perform a matrix multiplication operation on a first matrix and a second matrix, to obtain a multiplication result, where the first matrix is constructed based on the transformed target matrix, and the second matrix is constructed based on the transformed convolution kernel; and a vector operation module, configured to perform inverse winograd transform on the multiplication result, to obtain an output feature map, where a process of performing the inverse winograd transform on the matrix multiplication result is equivalent to performing a vector addition and subtraction operation on the matrix multiplication result, and this may be implemented by using a conventional vector operation module.

It can be learned from the first aspect that a target matrix and a convolution kernel that are obtained after forward winograd transform is performed are used to construct the first matrix and the second matrix respectively, then a matrix multiplication operation is performed on the first matrix and the second matrix by using an existing matrix operation module in the neural network accelerator, and inverse winograd transform is performed on the multiplication result by using an existing vector operation module in the neural network accelerator, so that modification of core operation modules such as a matrix operation module and a vector operation module in a neural network is avoided, a design is simple, a module configured to perform a point multiplication operation on the target matrix and the convolution kernel that are obtained after the forward winograd transform is performed is avoided from being added to the neural network accelerator, and efficiency of performing winograd calculation by the neural network accelerator is improved.

Optionally, with reference to the first aspect, in a first possible implementation, the preprocessing module is further configured to traverse the input feature map by using a sliding window, to obtain the target matrix corresponding to the input feature map. It can be learned from the first possible implementation of the first aspect that a specific manner of obtaining the target matrix is provided, the input feature map may be traversed by using the sliding window, and the target matrix is an input feature map of an area corresponding to the sliding window.

Optionally, with reference to the first possible implementation of the first aspect, in a second possible implementation, the input feature map is an input feature map on which a padding padding operation is performed, a size of the input feature map is W×H×k, W and H each are an even number not less than 4, k is an integer greater than 1, W is a row of the input feature map, H is a column of the input feature map, and k is a quantity of channels of the input feature map. The padding may be understood as adding some pixels to the periphery of the input feature map, for example, these pixels are initialized to 0 or another specified value. For an input feature map whose row and column each are not an even number not less than 4, pixels may be added to the periphery of the input feature map in a padding process, so that the row and the column of the input feature map each are an even number not less than 4. The input feature map is traversed by using a sliding window whose stride is 2 and whose size is 4×4, to obtain (((W - 2)(H - 2)/4) × k) target matrices, where the target matrices each are an input feature map of an area corresponding to the sliding window. It can be learned from the first possible implementation of the first aspect that a specific manner of determining the target matrix of the input feature map is provided. This increases diversity of a solution.

Optionally, with reference to the second possible implementation of the first aspect, in a third possible implementation, a size of the convolution kernel is 3×3×k×n, a stride of the convolution kernel is 1, n is a quantity of channels of the output feature map, and n is an integer greater than 1. According to the solution provided in this application, for a convolutional layer or pooling layer whose size is 3×3 (rows × columns) and whose stride is 1, a quantity of multiplication times can be greatly reduced, to improve performance and an energy efficiency ratio of an accelerator.

Optionally, with reference to the third possible implementation of the first aspect, in a fourth possible implementation, the first matrix includes an i^{th} element in the transformed target matrix, i is a positive integer not greater than 16, the first matrix is a matrix with m rows and k columns, m is equal to ((W - 2)(H - 2)/4), the second matrix includes an i^{th} element of the transformed convolution kernel, the second matrix is a matrix with K rows and n columns, and the multiplication result is used to determine the output feature map. It can be learned from the third possible implementation of the first aspect that a specific manner of constructing the first matrix and the second matrix is provided.

With reference to the first aspect or the first to the fourth possible implementations of the first aspect, the vector operation module is specifically configured to: perform the inverse winograd transform on the multiplication result, to output a third matrix; and perform a maximization operation on elements in the third matrix, to obtain the output feature map. It can be learned from the third possible implementation of the first aspect, which is a claimed embodiment of the present invention that, if the input feature map is processed at the pooling layer, a maximization operation is performed on the elements in the third matrix, to obtain the output feature map.

Optionally, with reference to the first aspect or the first to the fourth possible implementations of the first aspect, in a fifth possible implementation, the second forward winograd transform includes third forward winograd transform and fourth forward winograd transform, and the neural network accelerator further includes a storage module. The storage module is configured to store a first transformation result of performing the third forward winograd transform on the convolution kernel by using the third matrix. A matrix transform unit is specifically configured to perform the fourth forward winograd transform on the first transformation result by using a fourth matrix, to obtain the transformed convolution kernel. The third matrix and the fourth matrix are matrices obtained after a transformation matrix of the second forward winograd transform is decomposed, a value of an element in the third matrix is 0 or ±1, and the fourth matrix is a matrix other than the third matrix in the matrices obtained after decomposition. It can be learned from the fourth possible implementation of the first aspect that, to reduce a calculation amount of the matrix transform unit in the accelerator, a part of a process of the second forward winograd transform may be performed offline.

Optionally, with reference to the first aspect or the first to the fifth possible implementations of the first aspect, in a sixth possible implementation, the matrix transform unit is further configured to: obtain M elements of a plurality of transformed target matrices, where M is an integer greater than 1; process the M elements according to a first preset formula, to output a plurality of first matrices; obtain N elements of a plurality of transformed convolution kernels, where N is an integer greater than 1; and process the N elements according to a second preset formula, to output a plurality of second matrices. It can be learned from the fifth possible implementation of the first aspect that, to further improve the performance of the accelerator, a plurality of elements in each transformed target matrix may be extracted at a time, and a plurality of first matrices may be output at a time. In addition, a plurality of elements in the transformed convolution kernel may be extracted at a time, and a plurality of second matrices may be output at a time.

Optionally, with reference to the first to the sixth possible implementations of the first aspect, in a seventh possible implementation, the vector operation module is further configured to dequantize the multiplication result. The vector operation module is specifically configured to perform the inverse winograd transform on a multiplication result obtained after de-quantization. The vector operation module is further configured to quantize the output feature map, to obtain a quantized output feature map. It can be learned from the sixth possible implementation of the first aspect that, to meet a requirement of an operation of a fixed point number, a quantization operation and a de-quantization operation may be added.

Optionally, with reference to the first aspect or the first to the seventh possible implementations of the first aspect, in an eighth possible implementation, the vector operation module is further configured to perform an offset operation on at least one multiplication result. It can be learned from the seventh possible implementation of the first aspect that, in the solution provided in this application, performing an offset operation on a multiplication result may be equivalent to performing an offset operation on the output feature map.

A second aspect of this application provides an acceleration method, including: performing first forward winograd transform on a target matrix corresponding to an input feature map, to obtain a transformed target matrix; performing second forward winograd transform on a convolution kernel, to obtain a transformed convolution kernel; performing a matrix multiplication operation on a first matrix and a second matrix, to obtain a multiplication result, where the first matrix is constructed based on the transformed target matrix, and the second matrix is constructed based on the transformed convolution kernel; and performing inverse winograd transform on the multiplication result, to obtain an output feature map.

Optionally, with reference to the second aspect, in a first possible implementation, the input feature map is traversed by using a sliding window, to obtain the target matrix corresponding to the input feature map.

Optionally, with reference to the first possible implementation of the second aspect, in a second possible implementation, the input feature map is an input feature map on which a padding padding operation is performed, a size of the input feature map is W×H×k, W and H each are an even number not less than 4, k is an integer greater than 1, W is a row of the input feature map, H is a column of the input feature map, and k is a quantity of channels of the input feature map. The input feature map is traversed by using a sliding window whose stride is 2 and whose size is 4×4, to obtain (((W - 2)(H - 2)/4) × k) target matrices.

Optionally, with reference to the second possible implementation of the second aspect, in a third possible implementation, the padding padding operation is performed on the input feature map, so that the size of the input feature map is W×H×k, where W and H each are an even number not less than 4, k is an integer greater than 1, W is the row of the input feature map, H is the column of the input feature map, and k is the quantity of channels of the input feature map. The input feature map is traversed by using the sliding window whose stride is 2 and whose size is 4×4, to obtain (((W - 2)(H - 2)/4) × k) target matrices.

Optionally, with reference to the third possible implementation of the second aspect, in a fourth possible implementation, a size of the convolution kernel is 3×3×k×n, a stride of the convolution kernel is 1, n is a quantity of channels of the output feature map, and n is an integer greater than 1.

Optionally, with reference to the fourth possible implementation of the second aspect, in a fifth possible implementation, the first matrix includes an i^{th} element in the transformed target matrix, i is a positive integer not greater than 16, the first matrix is a matrix with m rows and k columns, m is equal to ((W - 2)(H - 2)/4), the second matrix includes an i^{th} element of the transformed convolution kernel, the second matrix is a matrix with K rows and n columns, and the multiplication result is used to determine the output feature map.

With reference to the second aspect or the first to the fifth possible implementations of the second aspect, the performing inverse winograd transform on the multiplication result, to obtain an output feature map includes: performing the inverse winograd transform on the multiplication result, to output a third matrix; and performing a maximization operation on elements in the third matrix, to obtain the output feature map.

Optionally, with reference to the second aspect or the first to the fifth possible implementations of the second aspect, in a sixth possible implementation, the second forward winograd transform includes third forward winograd transform and fourth forward winograd transform, and the performing second forward winograd transform on a convolution kernel whose size is 3×3×k×n and whose stride is 1, to obtain a transformed convolution kernel includes: performing the third forward winograd transform on the convolution kernel by using the third matrix, to obtain a first transformation result; and performing the fourth forward winograd transform on the first transformation result by using a fourth matrix, to obtain the transformed convolution kernel, where the third matrix and the fourth matrix are matrices obtained after a transformation matrix of the second forward winograd transform is decomposed, a value of an element in the third matrix is 0 or ±1, and the fourth matrix is a matrix other than the third matrix in the matrices obtained after decomposition.

Optionally, with reference to the second aspect or the first to the sixth possible implementations of the second aspect, in a seventh possible implementation, the method further includes: obtaining M elements of a plurality of transformed target matrices, where M is an integer greater than 1; processing the M elements according to a first preset formula, to output a plurality of first matrices; obtaining N elements of a plurality of transformed convolution kernels, where N is an integer greater than 1; and processing the N elements according to a second preset formula, to output a plurality of second matrices.

Optionally, with reference to the second aspect or the first possible implementation of the first aspect to the sixth possible implementation of the second aspect, the method further includes: dequantizing the multiplication result, to obtain a dequantized multiplication result. The performing inverse winograd transform on the multiplication result, to obtain an output feature map includes: performing the inverse winograd transform on the dequantized multiplication result, to obtain the output feature map. The method further includes: quantizing the output feature map, to obtain a quantized output feature map.

Optionally, with reference to the second aspect or the first to the seventh possible implementations of the second aspect, in an eleventh possible implementation, the method further includes: performing an offset operation on the multiplication result.

A third aspect of this application provides a chip system. The chip system includes a processor and a communication interface. The processor obtains program instructions through the communication interface, and when the program instructions are executed by the processor, the method described in any one of the second aspect or the possible implementations of the second aspect is implemented.

### BRIEF DESCRIPTION OF DRAWINGS

To describe the technical solutions in embodiments of the present invention or in the conventional technology more clearly, the following briefly describes the accompanying drawings for describing embodiments or the conventional technology. It is clear that the accompanying drawings in the following description show merely some embodiments of the present invention, and a person of ordinary skill in the art may still derive other drawings from these accompanying drawings without creative efforts.
FIG. 1 is a schematic diagram of a structure of a convolutional neural network according to an embodiment of the present invention;
FIG. 2 is a schematic diagram of a structure of a convolutional neural network according to an embodiment of the present invention;
FIG. 3-a is a schematic diagram of a structure of a winograd algorithm-based neural network accelerator according to an embodiment of this application;

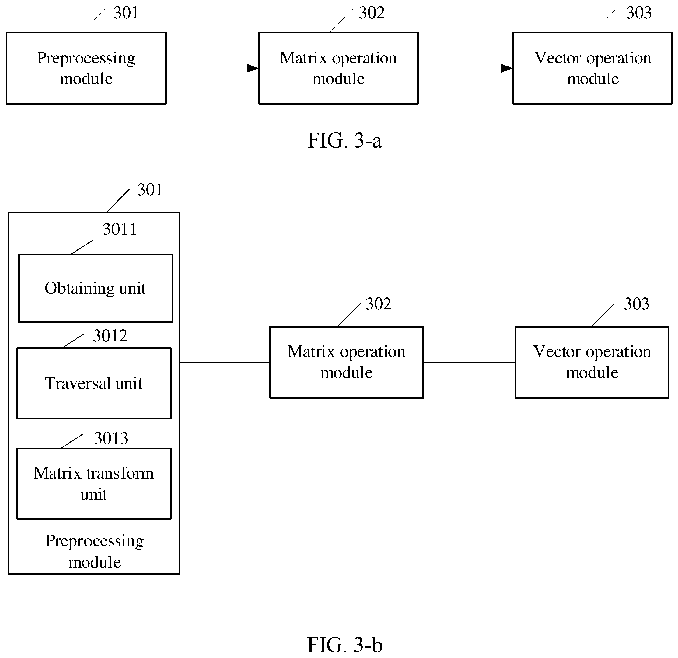

FIG. 3-b is a schematic diagram of a structure of a winograd algorithm-based neural network accelerator according to an embodiment of this application;

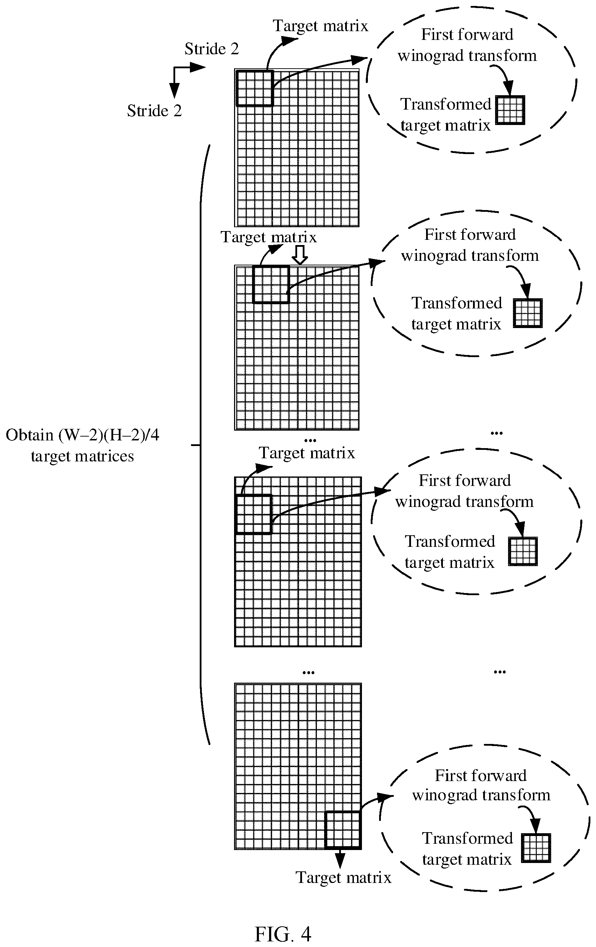

FIG. 4 is a schematic diagram of traversing an input feature map by a traversal unit 3012 in an accelerator according to an embodiment of this application;

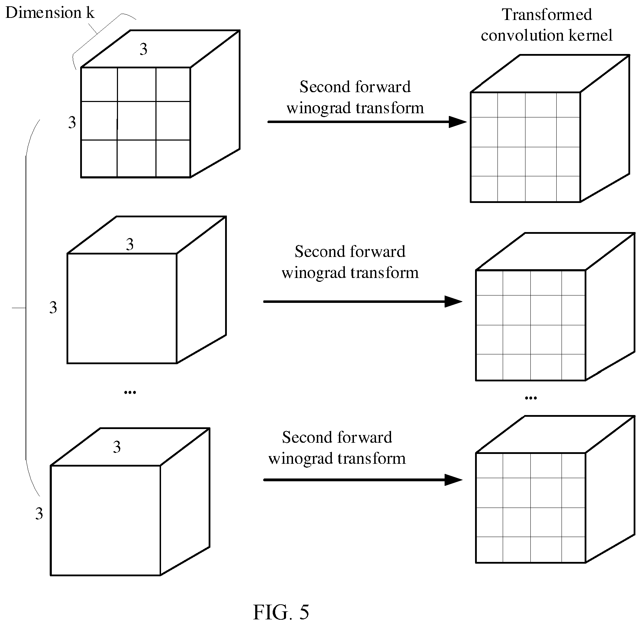

FIG. 5 is a schematic diagram of performing forward winograd transform on a convolution kernel in an accelerator according to an embodiment of this application;

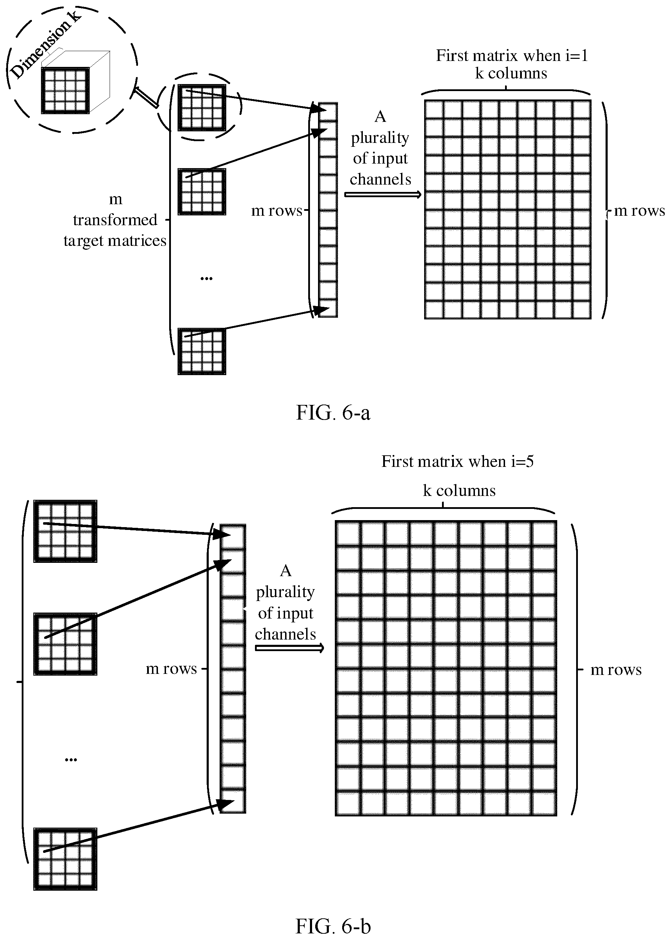

FIG. 6-a is a schematic diagram of a first matrix in an accelerator according to an embodiment of this application;
FIG. 6-b is a schematic diagram of a first matrix in an accelerator according to an embodiment of this application;

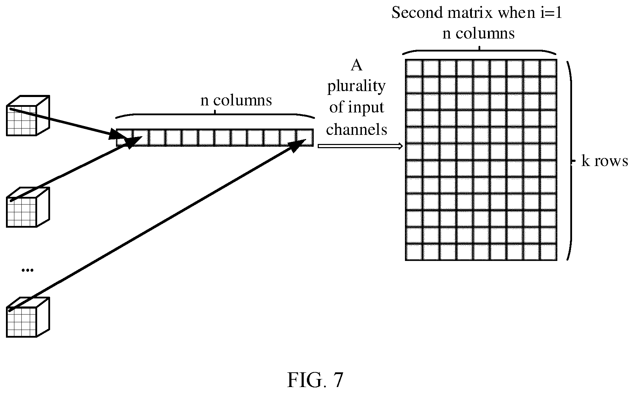

FIG. 7 is a schematic diagram of a second matrix in an accelerator according to an embodiment of this application;

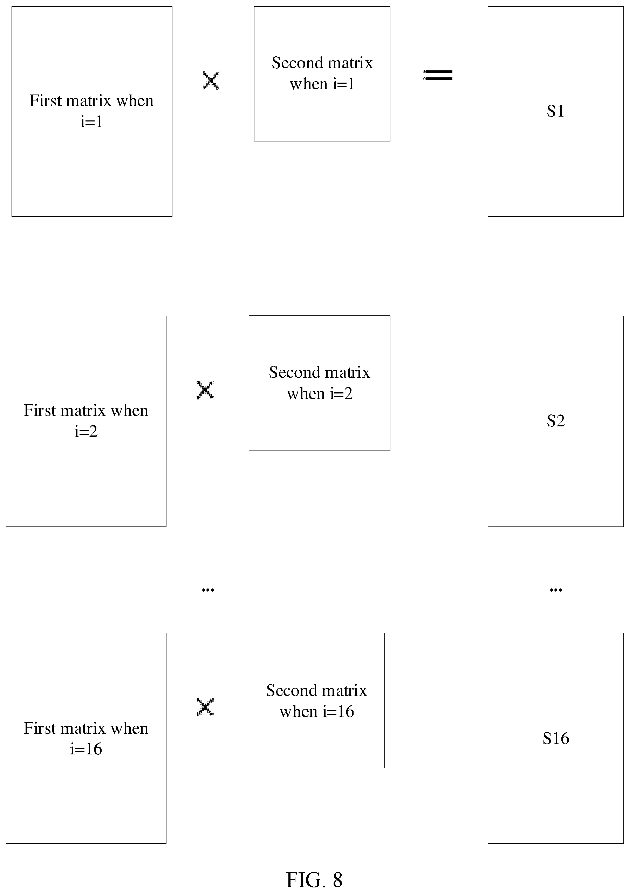

FIG. 8 is a schematic diagram of obtaining 16 multiplication results in an accelerator according to an embodiment of this application;

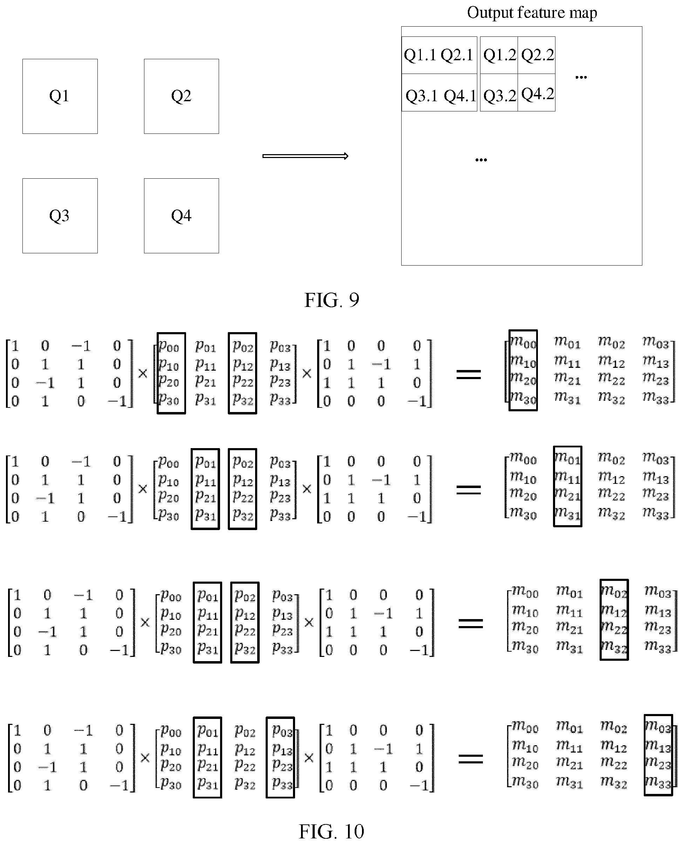

FIG. 9 is a schematic diagram of reordering elements in a third matrix according to a preset reordering rule according to an embodiment of this application;
FIG. 10 is a schematic diagram in which values of some elements in a transformed target matrix may be parallelly calculated according to an embodiment of this application;

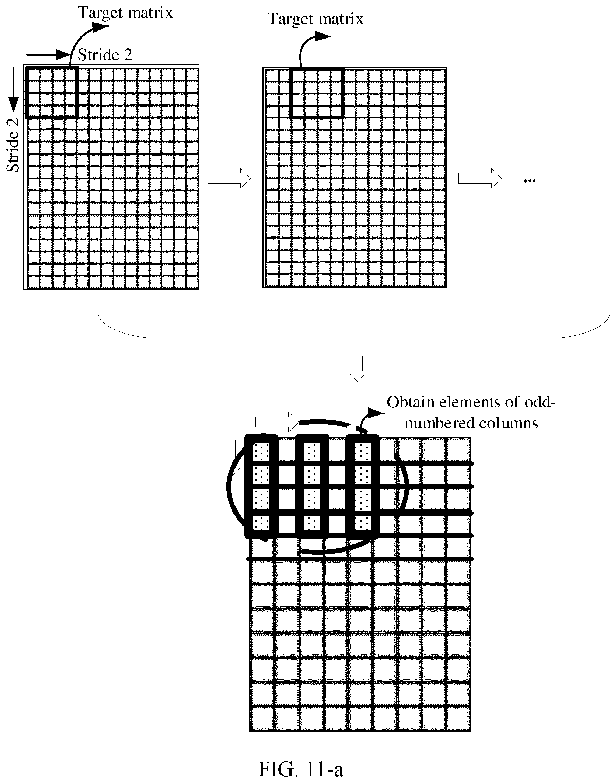

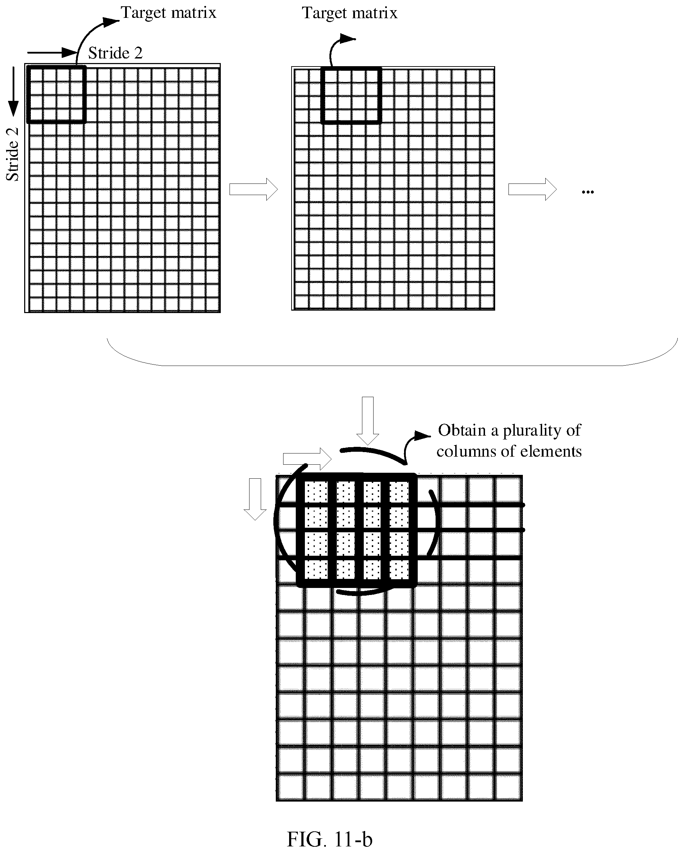

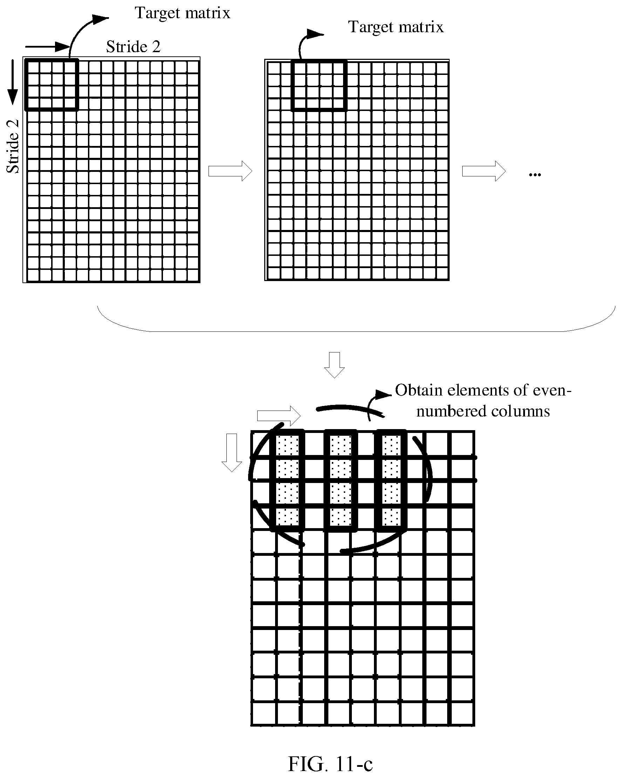

FIG. 11-a is a schematic diagram in which values of some elements in a transformed target matrix may be parallelly calculated according to an embodiment of this application;
FIG. 11-b is a schematic diagram in which values of some elements in a transformed target matrix may be parallelly calculated according to an embodiment of this application;
FIG. 11-c is a schematic diagram in which values of some elements in a transformed target matrix may be parallelly calculated according to an embodiment of this application;

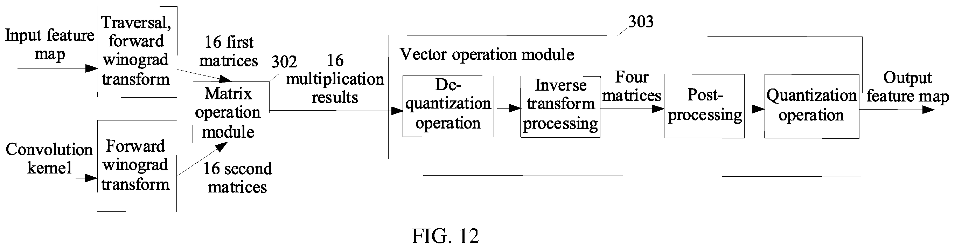

FIG. 12 is a schematic diagram of a structure of an accelerator according to this application;

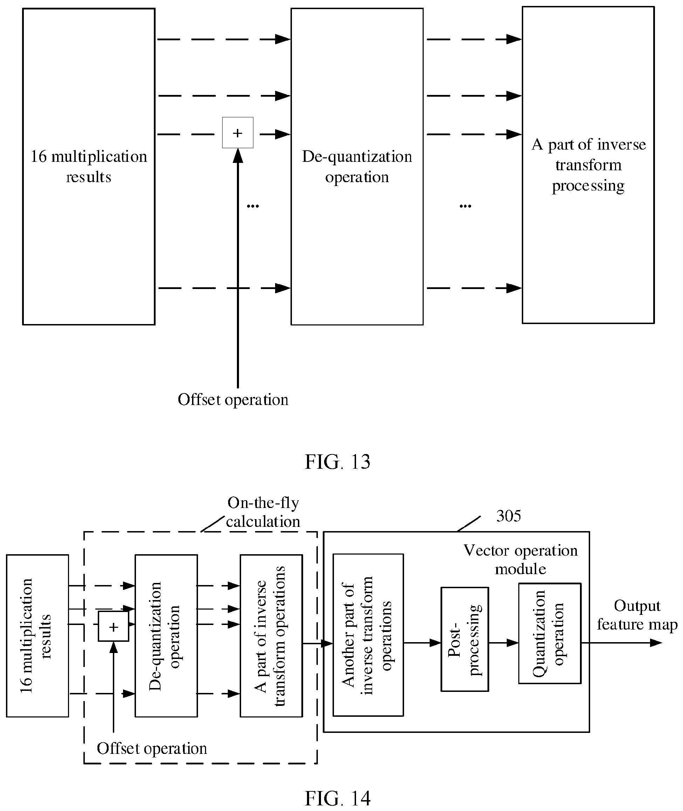

FIG. 13 is a schematic diagram of an offset operation according to an embodiment of this application;
FIG. 14 is a schematic diagram of an on-the-fly calculation according to an embodiment of this application;

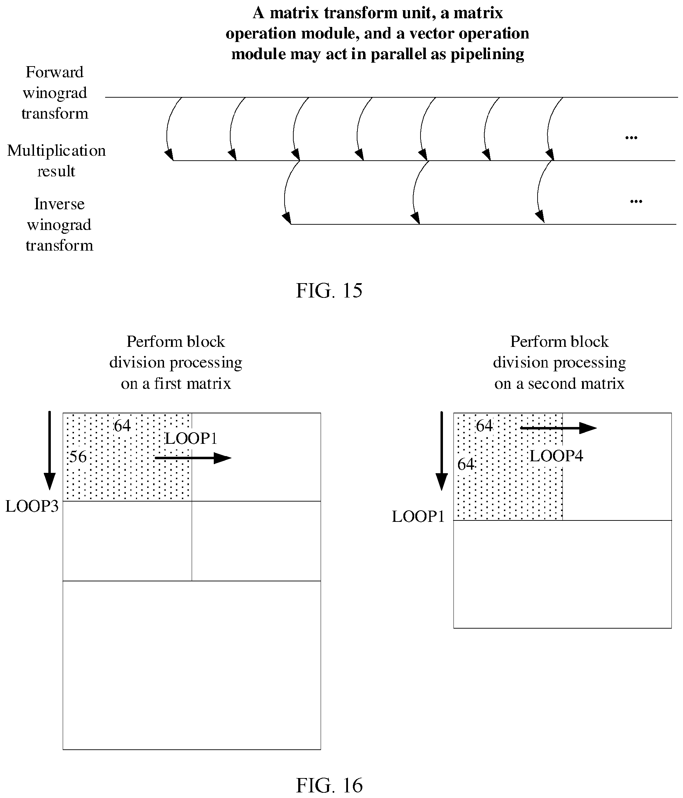

FIG. 15 is a schematic diagram in which a matrix transform unit, a matrix operation module, and a vector operation module may act in parallel as pipelining according to an embodiment of this application;
FIG. 16 is a schematic diagram of obtaining an output feature map through a plurality of operations in a solution according to an embodiment of this application; and

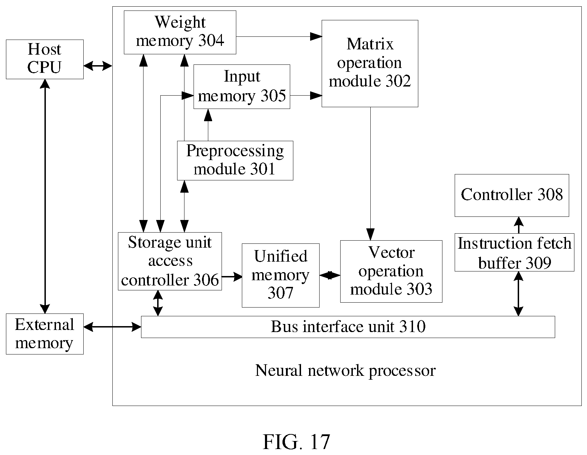

FIG. 17 is a schematic diagram of a structure of a chip according to an embodiment of this application.

### DESCRIPTION OF EMBODIMENTS

The following describes embodiments of this application with reference to the accompanying drawings. It is clear that the described embodiments are merely some but not all of embodiments of this application. A person of ordinary skill in the art may learn that, with technology development and emergence of a new scenario, the technical solutions provided in embodiments of this application are also applicable to a similar technical problem.

In the specification, claims, and the accompanying drawings of this application, the terms "first", "second", and the like are intended to distinguish between similar objects but do not necessarily indicate a specific order or sequence. It should be understood that data termed in such a way are interchangeable in proper circumstances, so that the embodiments described herein can be implemented in other orders than the order illustrated or described herein. Moreover, the terms "including", "having", and any other variants thereof are intended to cover a non-exclusive inclusion, for example, a process, method, system, product, or device that includes a series of steps or modules is not necessarily limited to those steps or modules that are clearly listed, but may include other steps or modules that are not clearly listed or that are inherent to such a process, method, product, or device. Names or numbers of steps in this application do not mean that the steps in a method procedure need to be performed in a time/logical sequence indicated by the names or numbers. An execution sequence of the steps in the procedure that have been named or numbered can be changed based on a technical objective to be achieved, provided that same or similar technical effects can be achieved. Division into the modules in this application is logical division. During actual application, there may be another division manner. For example, a plurality of modules may be combined or integrated into another system, or some features may be ignored or not performed. In addition, the displayed or discussed mutual coupling or direct coupling or communication connection may be through some ports, and the indirect coupling or communication connection between modules may be in an electrical form or another similar form. This is not limited in this application. In addition, modules or sub-modules described as separate components may be or may not be physically separated, or may be or may not be physical modules, or may not be grouped into a plurality of circuit modules. Objectives of the solutions of this application may be achieved by selecting some or all of the modules according to actual requirements.

Embodiments of this application relate to application of a large quantity of neural networks. Therefore, for ease of understanding, the following first describes related concepts of the neural network.

A neural network may include a neuron. The neuron may be an operation unit that uses xₛ and an intercept of 1 as an input. An output of the operation unit may be as follows: ${h}_{w , b} = f \left({W}^{T}x\right) = f \left({\sum }_{s = 1}^{n} {W}_{s} {x}_{s} + b\right)$ s=1, 2, ..., or n, n is a natural number greater than 1, Wₛ is a weight of xₛ, and b is a bias of the neuron. f indicates an activation function (activation functions) of the neuron, and the activation function is used for introducing a non-linear characteristic into the neural network, to convert an input signal in the neuron into an output signal. The output signal of the activation function may be used as an input of a next convolutional layer, and the activation function may be a sigmoid function. The neural network is a network constituted by connecting a plurality of single neurons together. To be specific, an output of a neuron may be an input to another neuron. An input of each neuron may be connected to a local receptive field of a previous layer to extract a feature of the local receptive field. The local receptive field may be an area including several neurons.

A convolutional neural network (convolutional neuron network, CNN) is a deep neural network with a convolutional architecture. The convolutional neural network includes a feature extractor including a convolutional layer and a sub-sampling layer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neurons arranged in a rectangular form. Neurons on a same feature plane share a weight, where the shared weight is a convolution kernel. Weight sharing may be understood as that an image information extraction manner is irrelevant to a location. The convolution kernel may be initialized in a form of a random-size matrix. In a process of training the convolutional neural network, the convolution kernel may obtain an appropriate weight through learning. In addition, a direct benefit brought by weight sharing is that connections between layers of the convolutional neural network are reduced and an overfitting risk is lowered.

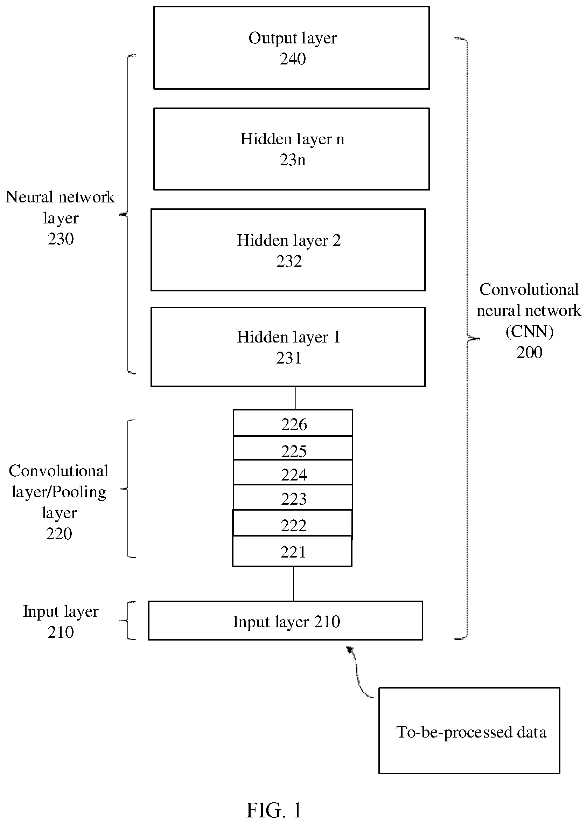

Because the CNN is a common neural network, the following focuses on a structure of the CNN in detail with reference to FIG. 1. As described in the foregoing basic concepts, a convolutional neural network is a deep neural network with a convolutional architecture, and is a deep learning (deep learning) architecture. In the deep learning architecture, multi-layer learning is performed at different abstract levels by using a machine learning algorithm. As a deep learning architecture, the CNN is a feed-forward (feed-forward) artificial neural network. Neurons in the feed-forward artificial neural network may respond to an input image.

A structure of a neural network in embodiments of this application may be shown in FIG. 1. In FIG. 1, a convolutional neural network (CNN) 200 may include an input layer 210, a convolutional layer/pooling layer 220 (where the pooling layer is optional), and a neural network layer 230. The input layer 210 may obtain to-be-processed data. The data relates to a graph, an image, a voice, and a text, and further relates to Internet of things data of a conventional device, including service data of an existing system and sensing data such as force, displacement, a liquid level, a temperature, and humidity. That the to-be-processed data is a to-be-processed image is used for description in the following. An obtained to-be-processed image is processed at the convolutional layer/pooling layer 220 and the subsequent neural network layer 230, to obtain a processing result of the image. The following describes in detail a layer structure in the CNN 200 in FIG. 1.

### Convolutional layer/Pooling layer 220:

### Convolutional layer:

As shown in FIG. 1, for example, the convolutional layer/pooling layer 220 may include layers 221 to 226. For example, in an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layers 221 and 222 are convolutional layers, the layer 223 is a pooling layer, the layers 224 and 225 are convolutional layers, and the layer 226 is a pooling layer. To be specific, an output of a convolutional layer may be used as an input of a subsequent pooling layer, or may be used as an input of another convolutional layer to continue to perform a convolution operation.

The following uses the convolutional layer 221 as an example to describe an internal working principle of one convolutional layer.

The convolutional layer 221 may include a plurality of convolution operators. The convolution operator is also referred to as a kernel or a convolution kernel. During image processing, the convolution operator functions as a filter that extracts specific information from an input image matrix. The convolution operator may essentially be a weight matrix, and the weight matrix is usually predefined. In a process of performing a convolution operation on an image, the weight matrix usually processes pixels at a granularity level of one pixel (or two pixels or the like, depending on a value of a stride stride) in a horizontal direction on an input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows × columns), namely, a plurality of same-type matrices, are applied. Outputs of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and still another weight matrix is used to blur unnecessary noise in the image. The plurality of weight matrices have the same size (rows × columns), and convolutional feature maps extracted by the plurality of weight matrices with the same size have a same size. Then, the plurality of extracted convolutional feature maps with the same size are combined to form an output of the convolution operation.

Weight values in these weight matrices need to be obtained through a lot of training during actual application. Each weight matrix formed by using the weight values obtained through training may be used to extract information from an input image, to enable the convolutional neural network 200 to perform correct prediction.

When the convolutional neural network 200 has a plurality of convolutional layers, a large quantity of general features are usually extracted at an initial convolutional layer (for example, 221). The general feature may also be referred to as a low-level feature. As the depth of the convolutional neural network 200 increases, a feature extracted at a subsequent convolutional layer (for example, 226) becomes more complex, for example, a high-level semantic feature. A feature with higher semantics is more applicable to a to-be-resolved problem.

### Pooling layer:

Because a quantity of training parameters usually needs to be reduced, a pooling layer usually needs to be periodically introduced after a convolutional layer. To be specific, for the layers 221 to 226 in the layer 220 shown in FIG. 1, one convolutional layer may be followed by one pooling layer, or a plurality of convolutional layers may be followed by one or more pooling layers. During image processing, the pooling layer is only used to reduce a space size of an image. The pooling layer may include an average pooling operator and/or a maximum pooling operator, to perform sampling on an input image to obtain an image with a small size. The average pooling operator may be used to calculate pixel values in the image in a specific range, to generate an average value. The average value is used an average pooling result. The maximum pooling operator may be used to select a pixel with a maximum value in a specific range as a maximum pooling result. In addition, similar to that a size of a weight matrix at a convolutional layer needs to be related to a size of an image, an operator at the pooling layer also needs to be related to a size of an image. A size of an image output after processing at the pooling layer may be less than a size of an image input to the pooling layer. Each pixel in the image output from the pooling layer represents an average value or a maximum value of a corresponding sub-area of the image input to the pooling layer.

### Neural network layer 230:

After processing performed at the convolutional layer/pooling layer 220, the convolutional neural network 200 is not ready to output required output information. As described above, at the convolutional layer/pooling layer 220, only a feature is extracted, and parameters brought by an input image are reduced. However, to generate final output information (required class information or other related information), the convolutional neural network 200 needs to use the neural network layer 230 to generate an output of a quantity of one or a group of classes. Therefore, the neural network layer 230 may include a plurality of hidden layers (such as 231 and 232 to 23n shown in FIG. 1) and an output layer 240. Parameters included in the plurality of hidden layers may be obtained through pre-training based on related training data of a specific task type, for example, the task type may include image recognition, image classification, super-resolution image reconstruction, and the like.

After the plurality of hidden layers in the neural network layer 230, that is, the last layer of the entire convolutional neural network 200 is the output layer 240. The output layer 240 has a loss function similar to cross entropy for classification, and is specifically configured to calculate a prediction error. Once forward propagation (for example, propagation in a direction from 210 to 240 in FIG. 1 is forward propagation) of the entire convolutional neural network 200 is completed, back propagation (for example, propagation in a direction from 240 to 210 in FIG. 1 is back propagation) starts to update the weight value and a deviation of each layer mentioned above, to reduce a loss of the convolutional neural network 200 and an error between a result output by the convolutional neural network 200 through the output layer and an ideal result.

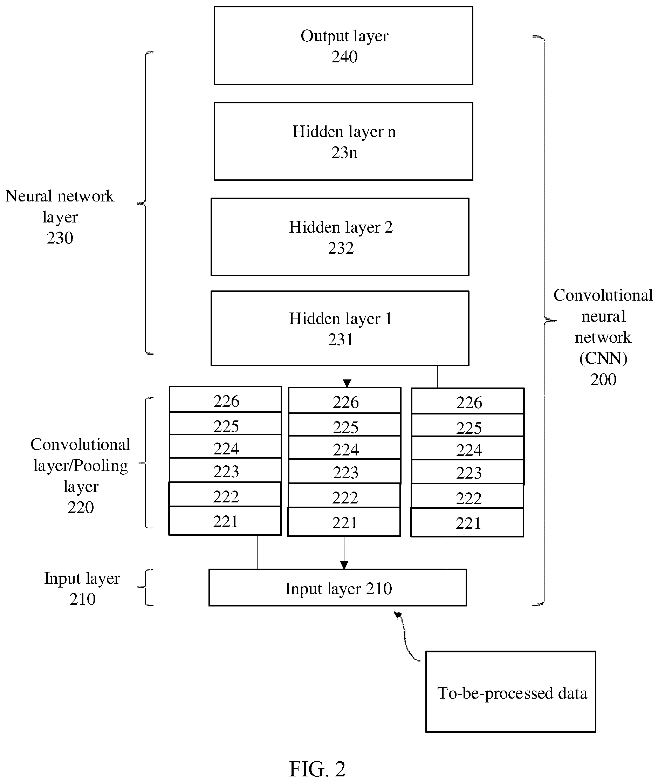

The structure of the neural network in embodiments of this application may be shown in FIG. 2. In FIG. 2, a convolutional neural network (CNN) 200 may include an input layer 210, a convolutional layer/pooling layer 220 (where the pooling layer is optional), and a neural network layer 230. Compared with FIG. 1, in FIG. 2, at the convolutional layer/pooling layer 220, a plurality of convolutional layers/pooling layers are in parallel, and features that are separately extracted are input to the neural network layer 230 for processing.

It should be noted that the convolutional neural network shown in FIG. 1 and the convolutional neural network shown in FIG. 2 are merely two example possible convolutional neural networks used in embodiments of this application. During specific application, the convolutional neural network used in embodiments of this application may alternatively exist in a form of another network model. In addition, the neural network provided in embodiments of this application may alternatively be a deep convolutional neural network (deep convolutional neural networks, DCNN), a recurrent neural network (recurrent neural network, RNNS), or the like.

Calculations in the neural network mainly include a convolution operation, an activation operation, a pooling operation, and the like. The convolution operation occupies most time of neural network processing. In addition, a convolutional layer whose size is 3×3 (rows × columns) and whose stride is 1 of a convolution kernel occupies a large proportion in convolution calculation. Therefore, acceleration of this type of convolutional layer is of great value. By using a winograd algorithm, a quantity of multiplication times of an algorithm of the convolutional layer whose size is 3×3 and whose stride is 1 may be greatly reduced. This is beneficial to hardware performance improvement and energy efficiency ratio improvement. To better understand the solution, the following describes the winograd algorithm.

For the winograd algorithm, an input signal D may be considered as a 4×4 matrix, as shown in the following formula 1-1, and a convolution kernel K is considered as a 3×3 matrix, as shown in the following formula 1-2. $D = \left[\begin{matrix}{d}_{00} & {d}_{01} & {d}_{02} & {d}_{03} \\ {d}_{10} & {d}_{11} & {d}_{12} & {d}_{13} \\ {d}_{20} & {d}_{21} & {d}_{22} & {d}_{23} \\ {d}_{30} & {d}_{31} & {d}_{32} & {d}_{33}\end{matrix}\right]$ $K = \left[\begin{matrix}{k}_{00} & {k}_{01} & {k}_{02} \\ {k}_{10} & {k}_{11} & {k}_{12} \\ {k}_{20} & {k}_{21} & {k}_{22}\end{matrix}\right]$

According to the winograd algorithm, a matrix multiplication form of convolution of D and K may be represented by the following formula 1-3. Because it is the conventional technology to transform a convolution operation according to the winograd algorithm, derivation is not performed in this application, and only a result obtained after derivation is listed. The formula 1-3 represents that a matrix D of the input signal is left multiplied by a matrix B^{T} and right multiplied by a matrix B, to obtain a transformed matrix U. This process is a process of performing forward winograd transform on the input signal. A size of the matrix U is 4×4. A matrix K corresponding to the convolution kernel is left multiplied by a matrix G and right multiplied by a matrix G^{T}, to obtain a transformed matrix V A size of the matrix V is 4×4. This process is a process of performing forward winograd transform on the convolution kernel. A point multiplication operation is performed on the matrix U and the matrix V, to obtain a matrix U×V, and then the matrix U×V is left multiplied by a matrix A^{T} and right multiplied by a matrix A, to obtain a matrix corresponding to a final output signal. This process is a process of inverse winograd transform. $\left\{\begin{matrix}{B}^{T} \times D \times B = U \\ G \times K \times {G}^{T} = V \\ {A}^{T} \times \left(U.∗V\right) \times A = S\end{matrix}\right.$

B^{T} is represented by using a formula 1-4, B is represented by using a formula 1-5, G is represented by using a formula 1-6, G^{T} is represented by using a formula 1-7, A^{T} is represented by using a formula 1-8, and A is represented by using a formula 1-9. The output signal is a 2×2 matrix and is represented by using a formula 2-0 in this application. ${B}^{T} = \left[\begin{matrix}1 & 0 & - 1 & 0 \\ 0 & 1 & 1 & 0 \\ 0 & - 1 & 1 & 0 \\ 0 & 1 & 0 & - 1\end{matrix}\right]$ $B = \left[\begin{matrix}1 & 0 & 0 & 0 \\ 0 & 1 & - 1 & 1 \\ 1 & 1 & 1 & 0 \\ 0 & 0 & 0 & - 1\end{matrix}\right]$ $G = \left[\begin{matrix}1 & 0 & 0 \\ 0.5 & 0.5 & 0.5 \\ 0.5 & - 0.5 & 0.5 \\ 0 & 0 & 1\end{matrix}\right]$ ${G}^{T} = \left[\begin{matrix}1 & 0.5 & 0.5 & 0 \\ 0 & 0.5 & - 0.5 & 0 \\ 0 & 0.5 & 0.5 & 1\end{matrix}\right]$ ${A}^{T} = \left[\begin{matrix}1 & 1 & 1 & 0 \\ 0 & 1 & - 1 & - 1\end{matrix}\right]$ $A = \left[\begin{matrix}1 & 0 \\ 1 & 1 \\ 1 & - 1 \\ 0 & - 1\end{matrix}\right]$ $S = \left[\begin{matrix}{S}_{00} & {S}_{01} \\ {S}_{10} & {S}_{12}\end{matrix}\right]$

After winograd transform, a quantity of multiplication times can be reduced from 36 to 16. If the winograd algorithm is extended to a neural network with a 3×3 convolution kernel, an energy efficiency ratio can be improved.

Currently, most matrix operation-based CNN accelerators are not integrated with 2D winograd for acceleration, and have bottlenecks in energy efficiency ratio and computing power. For an accelerator that integrates the winograd algorithm for acceleration, a core calculating unit usually needs to be modified a lot. For example, a matrix operation module and a vector operation module in a neural network need to be modified a lot, or dedicated hardware support is required, and a hardware module for performing a point multiplication operation needs to be added if necessary. Currently, a solution of applying the winograd algorithm to an accelerator of a neural network is not ideal.

In this application, a disadvantage of an existing method is comprehensively considered, and a conventional matrix operation module (matrix unit) and a conventional vector operation module (vector unit) are used to apply the winograd algorithm to an accelerator of a neural network. There is no need to modify the core calculating unit a lot and no dedicated hardware support is required.

For better understand this application, the following specifically describes a research idea of the technical solution described in this application.

It can be learned from the foregoing description of the winograd algorithm that, in the winograd algorithm, the input signal D is a 4×4 matrix, but during actual application, an input feature map may be of any size. To resolve this problem, the input feature map may be traversed by using a sliding window whose size is 4×4. In this case, an area corresponding to each sliding window is a 4×4 matrix. In this application, the area corresponding to the sliding window is referred to as a target matrix. In addition, in the winograd algorithm, a stride of a convolution kernel convolved with an input signal whose size is 4×4 is 1, to obtain an output signal. The output signal is a 2×2 matrix. In this case, in this solution, to output an output feature map corresponding to the input feature map, a stride of the sliding window whose size is 4×4 is set to 2. After it is determined that the stride of the sliding window is 2, a row and a column of the input feature map each should be an even number, to obtain an integer quantity of sliding windows. If the row and the column of the input feature map each are not an even number, a padding (padding) operation may be first performed on the input feature map, so that the row and the column of the input feature map each are an even number. In the winograd algorithm, the input signal D is a 4×4 matrix. Therefore, in this application, to use the winograd algorithm, the row and column of the input feature map each should be an even number not less than 4.

In the solution provided in this application, a matrix transform unit may be added. The matrix transform unit may perform forward winograd transform on each target matrix, to obtain a transformed target matrix. A process of performing forward winograd transform on a target matrix may be understood with reference to a process of performing forward transform on the input signal in the winograd algorithm, to be specific, the target matrix is left multiplied by a matrix B^{T} and right multiplied by a matrix B, to obtain a transformed target matrix. Forward winograd transform may be performed on each convolution kernel by using the matrix transform unit, to obtain a transformed convolution kernel. A process of performing forward winograd transform on a convolution kernel may be understood with reference to a process of performing forward transform on a convolution kernel in the winograd algorithm, to be specific, the convolution kernel is left multiplied by a matrix G and right multiplied by a matrix G^{T}, to obtain a transformed convolution kernel.

In addition, in a convolutional neural network, an input feature map includes a plurality of image channels, that is, compared with the input signal in the winograd algorithm, one dimension is added to the input feature map, and the added dimension is a quantity of input channels. In the convolutional neural network, a convolution kernel includes the dimension of the quantity of input channels, and the convolution kernel further includes a dimension of a quantity of output channels (namely, a quantity of convolution kernels). In other words, compared with the convolution kernel in the winograd algorithm, two dimensions are further added to the convolution kernel in the convolutional neural network: the quantity of input channels and the quantity of output channels. In the winograd algorithm, a point multiplication operation needs to be performed on a matrix U and a matrix V In the convolutional neural network, the dimension of the quantity of input channels is added to the input feature map, and the dimension of the quantity of input channels and the dimension of the quantity of output channels are added to the convolution kernel. Therefore, the winograd algorithm cannot be directly applied to the convolutional neural network. In the conventional technology, a core calculating unit of the convolutional neural network usually needs to be modified a lot, or a dedicated hardware support is needed. However, in the solution provided in this application, a point multiplication operation process is converted into a matrix multiplication operation based on obtaining the transformed target matrix and the transformed convolution kernel. According to the solution provided in this application, the winograd algorithm can be applied to the convolutional neural network only by adding a matrix transform unit and then using a conventional matrix operation module and a conventional vector operation module in the convolutional neural network. For how to convert the point multiplication operation into the matrix multiplication operation, in this application, a first matrix and a second matrix are constructed, to convert the point multiplication operation into the multiplication of the first matrix and the second matrix. The first matrix includes an i^{th} element in each transformed target matrix, i is a positive integer not greater than 16, the first matrix is a matrix with m rows and k columns, and m is equal to ((W - 2) (H - 2)/4). The second matrix includes an i^{th} element in each transformed convolution kernel, and the second matrix is a matrix with K rows and n columns. A multiplication result is used to determine an output feature map. Through the foregoing process, 16 first matrices and 16 second matrices may be obtained, and the 16 first matrices are multiplied by the 16 second matrices in a one-to-one correspondence, to obtain 16 multiplication results. For example, when i is 1, the first matrix includes the first element in each transformed target matrix, the second matrix includes the first element in each transformed convolution kernel, and the first matrix is multiplied by the second matrix, to obtain a first multiplication result. When i is 2, the first matrix includes the second element in each transformed target matrix, the second matrix includes the second element in each transformed convolution kernel, and the first matrix is multiplied by the second matrix, to obtain a second multiplication result. By analogy, when i is 16, a sixteenth multiplication result may be obtained. In this application, the multiplication result is sometimes referred to as a matrix multiplication result, and the matrix multiplication result and the matrix multiplication result have a same meaning. Then, the vector operation module performs inverse winograd transform on the matrix multiplication result, and a process of performing inverse winograd transform on the matrix multiplication result is to left multiply the matrix multiplication result by a matrix A^{T} and right multiply the matrix multiplication result by a matrix A. In this solution, a manner of constructing the first matrix and the second matrix is used to convert a result of the point multiplication operation into 16 matrix multiplication results. Therefore, a process of performing inverse winograd transform on the matrix multiplication results is equivalent to performing a vector addition and subtraction operation on the 16 matrix multiplication results, and this may be implemented by using a conventional vector operation module. A specific process is described in detail below. After the vector operation module processes the 16 vector multiplication results, the processed results are reordered, or a sum or an accumulated sum of the processed results is calculated to obtain the output feature map corresponding to the input feature map.

In addition, on the basis of the foregoing research idea, to reduce an area of an accelerator, in the solution provided in this application, a forward transform process of a convolution kernel is divided into two parts, one part of the process is performed offline, and the other part of the process is performed on a chip; or, a forward transform result of the convolution kernel is obtained through offline calculation. In addition, data formats of the input feature map and the convolution kernel may be fixed point numbers. To meet a requirement of a convolution operation of the fixed point numbers, the solution provided in this application may support de-quantization and quantization processing, and a de-quantization process may be performed before an inverse transform operation, so that a bit width can be reduced and computing power is greater. In addition, in the solution provided in this application, performing an offset operation on a multiplication result may be equivalent to performing an offset operation on the output feature map. In addition, to improve operation efficiency of the accelerator, the matrix transform unit, the matrix operation module, and the vector operation module in the solution provided in this application may act in parallel as pipelining. Some calculations in the solution provided in this application may be on-the-fly calculations. For example, some inverse winograd transforms may be completed through on-the-fly calculation (on-the-fly calculation) in a process of transferring from the matrix operation module to the vector operation module.

Based on the foregoing research idea, the following specifically describes the technical solutions provided in this application.

FIG. 3-a is a schematic diagram of a structure of a winograd algorithm-based neural network accelerator according to an embodiment of this application. A neural network accelerator provided in this application includes a preprocessing module 301, a matrix operation module 302, and a vector operation module 303.

Compared with an existing neural network accelerator in the conventional technology, the neural network accelerator provided in this application only needs to add a preprocessing module, to apply a winograd algorithm to a neural network.

The preprocessing module 301 is configured to perform first forward winograd transform on a target matrix corresponding to an input feature map, to obtain a transformed target matrix.

The preprocessing module 301 is further configured to perform second forward winograd transform on a convolution kernel, to obtain a transformed convolution kernel.

The matrix operation module 302 is configured to perform a matrix multiplication operation on a first matrix and a second matrix, to obtain a multiplication result. The first matrix is constructed based on the transformed target matrix, and the second matrix is constructed based on the transformed convolution kernel. In some implementations, the matrix operation module 302 includes a plurality of processing units (process engine, PE). In some implementations, the matrix operation module 302 is a two-dimensional systolic array. Alternatively, the matrix operation module 302 may be a one-dimensional systolic array or another electronic circuit that can perform mathematical operations such as multiplication and addition. In some implementations, the matrix operation module 302 is a general-purpose matrix processor. For example, it is assumed that there are an input matrix A, a weight matrix B, and an output matrix C. The matrix operation module fetches data corresponding to the matrix B from a memory, and buffers the data on each PE in the matrix operation module. The matrix operation module obtains data of the matrix A from the memory, and performs a matrix operation on the data of the matrix A and the data of the matrix B.

The vector operation module 303 is configured to perform inverse winograd transform on the multiplication result, to obtain an output feature map. The vector operation module includes a plurality of operation processing units, to perform further processing on an output of the matrix operation module if necessary, for example, vector multiplication, vector addition, an exponential operation, a logarithm operation, and size comparison. The vector operation module is mainly configured to perform network calculation at a non-convolutional/fully connected layer in the neural network, for example, batch normalization (batch normalization), pixel-level summation, and upsampling on a feature plane.

In some possible implementations, with reference to FIG. 3-b, the preprocessing module 301 may include an obtaining unit 3011, a traversal unit 3012, and a matrix transform unit 3013.

The obtaining unit 3011 is configured to obtain an input feature map on which padding padding is performed. A size of the input feature map is W×H×k, W and H each are an even number not less than 4, k is a positive integer, W is a row of the input feature map, H is a column of the input feature map, and k is a quantity of channels of the input feature map. In this application, the quantity of channels of the input feature map is sometimes referred to as a quantity of input channels for short, and the quantity of channels of the input feature map and the quantity of input channels have a same meaning.

The padding may be understood as adding some pixels to the periphery of the input feature map, and initializing these pixels to 0 or another specified value. For an input feature map whose row and column each are not an even number not less than 4, pixels may be added to the periphery of the input feature map in a padding process, so that the row and the column of the input feature map each are an even number not less than 4.

It should be noted that calculation manners of padding in a related technology may be used in this embodiment of this application.

The traversal unit 3012 is configured to traverse the input feature map by using a sliding window whose stride is 2 and whose size is 4×4, to obtain (((W - 2)(H - 2)/4) × k) target matrices, where the target matrices each are an input feature map of an area corresponding to the sliding window.

FIG. 4 is a schematic diagram of traversing an input feature map by the traversal unit 3012 in the accelerator provided in this embodiment of this application. In FIG. 4, only two dimensions, namely, a row and a column, are shown, and the dimension of the quantity of input channels is not shown. Because the row and the column of the input feature map are respectively W and H, ((W - 2)(H - 2)/4) areas corresponding to the sliding window may be obtained by traversing the input feature map by using the sliding window whose stride is 2 and whose size is 4×4, that is, ((W - 2)(H - 2)/4) 4×4 matrices may be obtained. With reference to FIG. 4, a matrix $\left[\begin{matrix}{p}_{00} & {p}_{01} & {p}_{02} & {p}_{03} \\ {p}_{10} & {p}_{11} & {p}_{12} & {p}_{13} \\ {p}_{20} & {p}_{21} & {p}_{22} & {p}_{23} \\ {p}_{30} & {p}_{31} & {p}_{32} & {p}_{33}\end{matrix}\right]$ may be considered as an area corresponding to the sliding window, and the matrix $\left[\begin{matrix}{p}_{00} & {p}_{01} & {p}_{02} & {p}_{03} \\ {p}_{10} & {p}_{11} & {p}_{12} & {p}_{13} \\ {p}_{20} & {p}_{21} & {p}_{22} & {p}_{23} \\ {p}_{30} & {p}_{31} & {p}_{32} & {p}_{33}\end{matrix}\right]$ is a target matrix. If it is considered that each target matrix further includes the dimension of the quantity of input channels, (((W - 2)(H - 2)/4) × k) target matrices may be obtained after the traversal unit 3012 traverses the input feature map.

The matrix transform unit 3013 is configured to perform the first forward winograd transform on a target matrix, to obtain a transformed target matrix. FIG. 4 shows a process of performing the first forward winograd transform on the target matrix $\left[\begin{matrix}{p}_{00} & {p}_{01} & {p}_{02} & {p}_{03} \\ {p}_{10} & {p}_{11} & {p}_{12} & {p}_{13} \\ {p}_{20} & {p}_{21} & {p}_{22} & {p}_{23} \\ {p}_{30} & {p}_{31} & {p}_{32} & {p}_{33}\end{matrix}\right]$, to obtain a transformed target matrix $\left[\begin{matrix}{m}_{00} & {m}_{01} & {m}_{02} & {m}_{03} \\ {m}_{10} & {m}_{11} & {m}_{12} & {m}_{13} \\ {m}_{20} & {m}_{21} & {m}_{22} & {m}_{23} \\ {m}_{30} & {m}_{31} & {m}_{32} & {m}_{33}\end{matrix}\right]$. That is, the target matrix $\left[\begin{matrix}{p}_{00} & {p}_{01} & {p}_{02} & {p}_{03} \\ {p}_{10} & {p}_{11} & {p}_{12} & {p}_{13} \\ {p}_{20} & {p}_{21} & {p}_{22} & {p}_{23} \\ {p}_{30} & {p}_{31} & {p}_{32} & {p}_{33}\end{matrix}\right]$ is left multiplied by a matrix *B^{T}* and right multiplied by a matrix B, to obtain the transformed target matrix.

The matrix transform unit 3013 is further configured to perform the second forward winograd transform on a convolution kernel whose size is 3×3×k×n and whose stride is 1, to obtain a transformed convolution kernel, where n is a quantity of channels of the output feature map. FIG. 5 shows a process of performing the second forward winograd transform on a convolution kernel $\left[\begin{matrix}k {′}_{00} & k {′}_{01} & k {′}_{02} \\ k {′}_{10} & k {′}_{11} & k {′}_{12} \\ k {′}_{20} & k {′}_{21} & k {′}_{22}\end{matrix}\right]$, to obtain a transformed convolution kernel $\left[\begin{matrix}{q}_{00} & {q}_{01} & {q}_{02} & {q}_{03} \\ {q}_{10} & {q}_{11} & {q}_{12} & {q}_{13} \\ {q}_{20} & {q}_{21} & {q}_{22} & {q}_{23} \\ {q}_{30} & {q}_{31} & {q}_{32} & {q}_{33}\end{matrix}\right]$. That is, the convolution kernel $\left[\begin{matrix}k {′}_{00} & k {′}_{01} & k {′}_{02} \\ k {′}_{10} & k {′}_{11} & k {′}_{12} \\ k {′}_{20} & k {′}_{21} & k {′}_{22}\end{matrix}\right]$ is left multiplied by a matrix G and right multiplied by a matrix *G^{T}*, to obtain the transformed convolution kernel.

The matrix operation module 302 is configured to determine the multiplication result of the first matrix and the second matrix. The first matrix includes an i^{th} element in each transformed target matrix, i is a positive integer not greater than 16, the first matrix is a matrix with m rows and k columns, and m is equal to ((W - 2) (H - 2)/4). The second matrix includes an i^{th} element in each transformed convolution kernel, and the second matrix is a matrix with K rows and n columns. The multiplication result is used to determine the output feature map.

In the winograd algorithm, a point multiplication operation should be performed on the transformed convolution kernel and the transformed target matrix. In this application, the point multiplication operation performed on the transformed convolution kernel and the transformed target matrix is converted into a multiplication operation between two matrices, so that the winograd algorithm can be applied to a convolutional neural network by using only the conventional matrix operation module 302 in such a design. The following describes an idea of how to construct the first matrix and the second matrix.

An i^{th} element in each transformed target matrix is extracted, to form a matrix with m rows and k columns, where the matrix is the first matrix. In the description of FIG. 4, the dimension k of the target matrix is not presented, that is, that the input feature map includes a plurality of input channels is not presented. In a process of constructing the first matrix, considering that the input feature map includes a plurality of input channels, each element in each transformed target matrix should include a plurality of input channels. As shown in FIG. 6-a, an example in which i is 1 is used for description. When i is 1, the first matrix includes a first element in each transformed target matrix. Considering that the input feature map further includes the dimension of the quantity of input channels, the first matrix is a matrix with m rows and k columns. It should be noted that a quantity of rows and a quantity of columns in the first matrix shown in FIG. 6-a are merely examples for description. A value of k should be determined based on the input channels of the input feature map, and a value of m should be determined based on a quantity of rows and a quantity of columns of the input feature map. Specifically, m is equal to ((W - 2)(H - 2)/4). Details are not described in this application. To better understand the solution, the following uses an example in which i is 5 for description. As shown in FIG. 6-b, when i is 5, the first matrix includes a fifth element in each transformed target matrix, and the first matrix is a matrix with m rows and k columns. Because each transformed target matrix includes 16 elements, a total of 16 first matrices may be obtained. For a manner of constructing each first matrix, refer to FIG. 6-a and FIG. 6-b for understanding.

An i^{th} element in each transformed convolution kernel is extracted, to form a matrix with K rows and n columns, and the matrix is the second matrix. As shown in FIG. 7, an example in which i is 1 is used for description. When i is 1, the second matrix includes a first element in each transformed convolution kernel. Considering that the input feature map further includes the dimension of the quantity of input channels, the second matrix is a matrix with K rows and n columns. It should be noted that a quantity of rows and a quantity of columns of the second matrix shown in FIG. 7 are merely examples for description. A value of n should be determined based on a quantity of output channels. In other words, the value of n should be determined based on a quantity of convolution kernels. This is not described again in this application. Because each transformed convolution kernel includes 16 elements, a total of 16 second matrices may be obtained. A manner of constructing each second matrix may be understood with reference to FIG. 7.

In the foregoing manner, the point multiplication operation between the transformed target matrix and the transformed convolution kernel may be converted into multiplication of the first matrix and the second matrix. With reference to FIG. 8, a result of the point multiplication operation is equivalent to a multiplication result of 16 matrices. It is assumed that multiplication results of 16 matrices are respectively a matrix S1, a matrix S2, a matrix S3, a matrix S4, a matrix S5, a matrix S6, a matrix S7, a matrix S8, a matrix S9, a matrix S10, a matrix S11, a matrix S12, a matrix S13, a matrix S14, a matrix S15, and a matrix S16. The accelerator provided in this application further includes the vector operation module 303. Because elements in transformation matrices A^{T} and A of the inverse winograd transform are 0 or ±1, performing inverse winograd transform on the multiplication result is equivalent to performing an element wise operation on the multiplication results of 16 matrices by using the vector operation module. A^{T} and A are represented by the following formulas: ${A}^{T} = \left[\begin{matrix}1 & 1 & 1 & 0 \\ 0 & 1 & - 1 & - 1\end{matrix}\right]$ $A = \left[\begin{matrix}1 & 0 \\ 1 & 1 \\ 1 & - 1 \\ 0 & - 1\end{matrix}\right]$

Element wise refers to performing an operation on corresponding elements in at least two matrices, for example, performing an operation on an i^{th} element in one matrix and an i^{th} element in another matrix, where the operation may include an addition operation, a subtraction operation, or the like.

Specifically, addition or subtraction is performed on 16 multiplication results, and Q1=P1+P2+P3, Q2=P2-P3-P4, Q3=P5+P6+P7, and Q4=P6-P7-P8 may be determined by using an inverse winograd transform formula, where P1=S0+S4+S8, P2=S1+S5+S9, P3=S2+S6+S10, P4=S3+S7+S11, P5=S4-S8-S12, P6=S5-S9-S13, P7=S6-S10-S14, and P8=S7-S11-S15.

Q1, Q2, Q3, and Q4 may be used to determine the output feature map corresponding to the input feature map.

It can be learned that performing inverse winograd transform on the 16 multiplication results may be converted into performing an addition or subtraction operation on multiplication results of 16 matrices by using the conventional vector operation module 303, to output a third matrix, where the third matrix may include Q1, Q2, Q3, and Q4. The third matrix may be processed to obtain the output feature map.

In a possible implementation, if the input feature map is processed at a pooling layer, because common operations at the pooling layer usually include maximum value pooling and average value pooling, a maximum value or a sum of the four matrices Q1, Q2, Q3, and Q4 included in the third matrix may be obtained. (Q1+Q2+Q3+Q4)/4 is output during average value pooling, and MAX(Q1, Q2, Q3, Q4) is output during maximum value pooling. Data output according to the solution provided in this application, for example, (Q1+Q2+Q3+Q4)/4 and MAX(Q1, Q2, Q3, Q4), may be used as an expression form of the output feature map.

In a possible implementation, if the input feature map is processed at a convolutional layer, the elements in the third matrix further need to be reordered according to a preset reordering rule, to obtain the output feature map. With reference to FIG. 9, an i^{th} element in the matrix, Q1 an i^{th} element in the matrix Q2, an i^{th} element in the matrix Q3, and an i^{th} element in the matrix Q4 are extracted to form a 2×2 matrix, and an output feature map is obtained after reordering. With reference to FIG. 9, for example, a first element Q1.1 in the matrix Q1, a first element 2.1 in the matrix Q2, a first element 3.1 in the matrix Q3, and a first element Q4.1 in the matrix Q4 are extracted to form a 2×2 matrix, a second element Q1.1 in the matrix Q1, a second element 2.1 in the matrix Q2, a second element 3.1 in the matrix Q3, and a second element Q4.1 in the matrix Q4 are extracted to form a 2×2 matrix, and so on, until all elements in the four matrices Q1, Q2, Q3, and Q4 are reordered according to the preset reordering rule. In a possible implementation, in-row reordering may be performed on the elements in the third matrix by using the vector operation module 303, and then inter-row reordering is performed on the elements in the third matrix by using the vector operation module 303. In a possible implementation, in-row reordering may be performed on the elements in the third matrix by using the vector operation module 303, and then inter-row reordering is performed through direct memory access (direct memory access, DMA) transferring. It should be noted that each element in the third matrix includes a plurality of output channels.

The following describes a principle of reordering the elements in the third matrix according to the preset reordering rule, to obtain the output feature map. A first element in each transformed target matrix is extracted to form a first matrix with m rows and k columns, a first element in each transformed convolution kernel is extracted to form a second matrix with K rows and n columns, and when i is 1, a multiplication result of the first matrix and the second matrix is S1; a second element in each transformed target matrix is extracted to form a first matrix with m rows and k columns, a second element in each transformed convolution kernel is extracted to form a second matrix with K rows and n columns, and when i is 2, a multiplication result of the first matrix and the second matrix is S2; and so on. If the first element in each of matrices S1 to S16 is extracted to form a matrix, for example, form a matrix 1, a 2×2 matrix may be output after inverse winograd transform is performed on the matrix 1, and each element in the 2×2 matrix includes a quantity of a plurality of output channels, that is, each element has the dimension of the quantity of output channels. The 2×2 matrix 1 is an output feature map corresponding to an input feature map of an area in which a first sliding window is located. For another example, if the second element in each of the matrices in S1 to S16 is extracted to form a matrix, for example, form a matrix 2, a 2×2 matrix may be output after inverse winograd transform is performed on the matrix 2, and each element in the 2×2 matrix includes a quantity of a plurality of output channels. The 2×2 matrix 2 is an output feature map corresponding to an input feature map of an area in which a second sliding window is located, and the second sliding window means that a sliding window whose stride is 2 slides once. An operation procedure for obtaining an i^{th} element in the 2×2 matrix corresponding to the matrix 1 is the same as an operation procedure for obtaining an i^{th} element in the 2×2 matrix corresponding to the matrix 2, and so on. An operation procedure for obtaining an i^{th} element in a 2×2 matrix corresponding to a matrix i is the same. The matrix i is a matrix formed by all the i^{th} elements extracted from the matrices S1 to S16. Therefore, inverse winograd transform is performed on the 16 multiplication results to output Q1, Q2, Q3, and Q4. Q1 includes the first elements in the matrix 1 to the matrix 16, Q2 includes the second elements in the matrix 1 to the matrix 16, Q3 includes the third elements in the matrix 1 to the matrix 16, and Q4 includes the fourth elements in the matrix 1 to the matrix 16. Therefore, after Q1, Q2, Q3, and Q4 are obtained, the elements in the third matrix need to be reordered according to the preset reordering rule, to obtain the output feature map. For understanding of a reordering manner, refer to FIG. 9.

The foregoing describes the accelerator provided in this embodiment of this application. In the solution provided in this application, the winograd algorithm can be applied to a convolutional neural network by using a conventional matrix operation module and a conventional vector operation module in the general convolutional neural network. For a convolutional layer or pooling layer whose size is 3×3 and whose stride is 1, a quantity of multiplication times can be greatly reduced, to improve performance and an energy efficiency ratio of the accelerator.

As mentioned above, the i^{th} element in each transformed target matrix is extracted to form a matrix with m rows and k columns, and the matrix is a first matrix. To further improve the performance of the accelerator, a plurality of elements in each transformed target matrix may be extracted at a time, and a plurality of first matrices are output at a time. For example, the following provides descriptions with reference to several specific implementations.

A manner of performing forward winograd transform on each target matrix, to convert the target matrix into a transformed target matrix may be represented by using the following formula 2-2. $\begin{matrix}\left[\begin{matrix}1 & 0 & - 1 & 0 \\ 0 & 1 & 1 & 0 \\ 0 & - 1 & 1 & 0 \\ 0 & 1 & 0 & - 1\end{matrix}\right] \times \left[\begin{matrix}{p}_{00} & {p}_{01} & {p}_{02} & {p}_{03} \\ {p}_{10} & {p}_{11} & {p}_{12} & {p}_{13} \\ {p}_{20} & {p}_{21} & {p}_{22} & {p}_{23} \\ {p}_{30} & {p}_{31} & {p}_{32} & {p}_{33}\end{matrix}\right] \times \left[\begin{matrix}1 & 0 & 0 & 0 \\ 0 & 1 & - 1 & 1 \\ 1 & 1 & 1 & 0 \\ 0 & 0 & 0 & - 1\end{matrix}\right] \\ = \left[\begin{matrix}{m}_{00} & {m}_{01} & {m}_{02} & {m}_{03} \\ {m}_{10} & {m}_{11} & {m}_{12} & {m}_{13} \\ {m}_{20} & {m}_{21} & {m}_{22} & {m}_{23} \\ {m}_{30} & {m}_{31} & {m}_{32} & {m}_{33}\end{matrix}\right]\end{matrix}$

In the formula, m₀=P₀₀-P₂₀-P₀₂+P₂₂, m₁₀=P₁₀+P₂₀+P₁₂+P₂₂, m₂₀=P₂₀-P₁₀-P₂₂+P₁₂, and m₃₀=P₁₀-P₃₀-P₁₂+P₃₂. It can be learned that a first column and a third column of the target matrix are used for operations of m₀₀, m₁₀, m₃₀, and m₄₀. m₀₁=P₀₁-P₂₁+P₀₂-P₂₂, m₁₁=P₁₁+P₂₁+P₁₂+P₂₂, m₂₁=P₂₁-P₁₁+P₂₂-P₁₂, and m₃₁=P₁₁-P₃₁+P₁₂-P₃₂. It can be learned that a second column and the third column of the target matrix are used for operations of m₀₁, m₁₁, m₂₁, and m₃₁. m₀₂=P₀₂-P₂₂-P₀₁+P₂₁, m₁₂=P₂₂+P₁₂-P₁₁-P₂₁, m₂₂=P₂₂-P₁₂-P₂₁+P₁₁, and m₃₂=P₁₂-P₃₂-P₁₁+P₃₁. It can be learned that the second column and the third column of the target matrix are used for operations of m₀₂, m₁₂, m₂₂, and m₃₂. m₀₃= P₀₁-P₂₁-P₀₃+P₂₃, m₁₃=P₁₁+P₂₁-P₁₃-P₂₃, m₂₃=P₂₁-P₁₁-P₂₃+P₁₃, and m₃₃=P₁₁-P₃₁-P₁₃+P₃₃. **It can** be **learned that the** second column and a fourth column of the target matrix are used for operations of m₀₃, m₁₃, m₂₃, and m₃₃. With reference to FIG. 10, that values of some elements in the transformed target matrix may be parallelly calculated is represented in a more intuitive manner. When a plurality of elements in a target matrix are obtained at a time, a plurality of first matrices may be output based on the plurality of obtained elements, or some elements in a plurality of first matrices may be output. For example, elements of a first column and elements of a third column, corresponding to each sliding window, are obtained, and when the sliding window slides once, three columns of elements may be obtained. Elements of first columns of two transformed target matrices may be separately output based on the obtained three columns of elements. For another example, all elements corresponding to each sliding window are obtained. When the sliding window slides once, all elements in two target matrices may be obtained. A unified operation is performed on all the elements in the two target matrices, and two transformed target matrices may be simultaneously output. It may be considered that, to maximize utilization of the matrix operation module, a quantity of transformed target matrices that are output by the matrix transform unit each time may be determined based on an actual bandwidth and a storage amount of the matrix operation module. For example, the matrix transform unit outputs one transformed target matrix, two transformed target matrices, four transformed target matrices, eight transformed target matrices, or 16 transformed target matrices each time.

The following provides descriptions with reference to several embodiments. It can be learned from the foregoing descriptions that there are cross parts in a process of calculating each element in a transformed target matrix. For example, elements of a first column and elements of a third column in a target matrix are used for calculating elements of a first column in the transformed target matrix. In this case, with reference to FIG. 11-a, elements of odd-numbered columns in a plurality of target matrices may be obtained, and elements of a first column in one transformed target matrix or elements of first columns in a plurality of transformed target matrices are determined based on the elements of odd-numbered columns that are in the target matrices and that are obtained in one time or in a plurality of times. For example, as shown in FIG. 11-a, elements of three odd-numbered columns in a target matrix are obtained, and elements of first columns in two transformed target matrices may be obtained. For another example, elements of a second column and elements of a third column in a target matrix are used for calculating both elements of a second column and elements of a third column in the transformed target matrix. In this case, with reference to FIG. 11-b, a plurality of columns of elements in a plurality of target matrices may be obtained, and elements of a second column and elements of a third column in one transformed target matrix or elements of second columns and elements of third columns in a plurality of transformed target matrices are determined based on the plurality of columns of elements that are in the target matrices and that are obtained in one time or in a plurality of times. For example, as shown in FIG. 11-b, four columns of elements in a target matrix are obtained, and elements of second columns and elements of third columns in two transformed target matrices may be obtained. For another example, elements of a second column and elements of a fourth column in a target matrix are used for calculating elements of a fourth column in a transformed target matrix. In this case, with reference to FIG. 11-c, elements of even-numbered columns in a plurality of target matrices may be obtained, and elements of a fourth column in one transformed target matrix or elements of fourth columns in a plurality of transformed target matrices are determined based on the elements of even-numbered columns that are in the target matrices and that are obtained in one time or in a plurality of times. As shown in FIG. 11-a to FIG. 11-c, after four rows of elements and six columns of elements are obtained, two transformed target matrices may be output based on the four rows of elements and six columns of elements. It should be noted that a dimension of input channels is not shown in FIG. 11-a to FIG. 11-c. However, it should be specified that each element of each target matrix includes a plurality of input channels, and each element of each transformed target matrix also includes a plurality of input channels.

To further improve the performance of the accelerator, a plurality of elements in each convolution kernel may be extracted at a time, and a plurality of second matrices are output at a time. There are cross parts in a process of calculating each element in a transformed convolution kernel. The following provides a description with reference to a formula 2-3. $\left[\begin{matrix}1 & 0 & 0 \\ 0.5 & 0.5 & 0.5 \\ 0.5 & - 0.5 & 0.5 \\ 0 & 0 & 1\end{matrix}\right] \times \left[\begin{matrix}k {′}_{00} & k {′}_{01} & k {′}_{02} \\ k {′}_{10} & k {′}_{11} & k {′}_{12} \\ k {′}_{20} & k {′}_{21} & k {′}_{22}\end{matrix}\right] \times \left[\begin{matrix}1 & 0.5 & 0.5 & 0 \\ 0 & 0.5 & - 0.5 & 0 \\ 0 & 0.5 & 0.5 & 1\end{matrix}\right] = \left[\begin{matrix}{q}_{00} & {q}_{01} & {q}_{02} & {q}_{03} \\ {q}_{10} & {q}_{11} & {q}_{12} & {q}_{13} \\ {q}_{20} & {q}_{21} & {q}_{22} & {q}_{23} \\ {q}_{30} & {q}_{31} & {q}_{32} & {q}_{33}\end{matrix}\right]$

q₀₀=*k*'₀₀, q₁₀=(*k*'₀₀ *+ k*'₁₀ *+ k*'₂₀)/2, q₂₀=(*k*'₀₀ *₋ k*'₁₀ *+ k*'₂₀)/2, and q₃₀=*k*'₂₀. It can be learned that the first column of the convolution kernel is used for operations of q₀₀, q₁₀, q₂₀, and q₃₀. q₀₁=(*k*'₀₀ *₊ k*'₀₁ *+ k*'₀₂)/2, q₁₁=(*k*'₀₀ *+ k*'₀₁ *+ k*'₀₂ + *k*'₁₀ *+ k*'₁₁ *+ k*'₁₂ + *k*'₂₀ *+ k*'₂₁ *+ k*'₂₂)/4, q₂₁=(*k*'₀₀ *+ k*'₀₁ *+ k*'₀₂ - *k*'₁₀ - *k*'₁₁ - *k*'₁₂ + *k*'₂₀ *+ k*'₂₁ + *k*'₂₂)/4, and q₃₁=(*k*'₂₀ + *k*'₂₁ *+ k*'₂₂)/2. It can be learned that each column of the convolution kernel is used for operations of q₀₀, q₁₀, q₂₀, and q₃₀. q₀₂=( *k*'₀₀ - *k*'₀₁ *+ k*'₀₂ )/2, q₁₂=( *k*'₀₀ - *k*'₀₁ *+ k*'₀₂ + *k*'₁₀ *+ k*'₁₁ *+ k*'₁₂ *+ k*'_{20 -} *k*'₂₁ *+ k*'₂₂ )/4, q₂₂=(*k*'₀₀ - *k*'₀₁ *+ k*'₀₂ - *k*'₁₀ *+ k*'₁₁ - *k*'₁₂ + *k*'₂₀ - *k*'₂₁ *+ k*'₂₂)/4, and q₃₂=(*k*'₂₀ - *k*'₂₁ *+ k*'₂₂)/2. It can be learned that each column of the convolution kernel is used for operations of q₀₂, q₁₂, q₂₂, and q₃₂. q₀₃=*k*'₀₂, q₁₃=(*k*'₀₂ *+ k*'₁₂ *+ k*'₂₂)/2, q₂₃=(*k*'₀₂ - *k*'₁₂ + *k*'₂₂)/2, and q₃₃=*k*'₂₂. It can be learned that the third column of the convolution kernel is used for operations of q₀₀, q₁₀, q₂₀, and q₃₀.

A manner of performing forward winograd transform on each convolution kernel to convert the convolution kernel into a transformed convolution kernel may be represented by using the formula 2-3. There are cross parts in a process of calculating each element in a transformed convolution kernel. An operation may be performed by performing vector addition and subtraction between elements in a convolution kernel, to output a plurality of transformed convolution kernels, or output some elements in a plurality of transformed convolution kernels. To improve parallelism, each point has quantities of all or some of input channels and output channels.

It should be noted that, corresponding to different bandwidth and storage requirements, when 16 first matrices or 16 second matrices are output, there may be a plurality of calculation orders.

In a possible implementation, to reduce a calculation amount of the matrix transform unit in the accelerator, a process of the second forward winograd transform may be performed offline. To be specific, the accelerator provided in this application further includes a storage module, the storage module is configured to store a result of the second forward winograd transform, and another module in the accelerator may directly invoke the result of the second forward winograd transform prestored in the storage module. In a possible implementation, a part of the process of the second forward winograd transform may alternatively be performed on a chip, and another part of the process of the second forward winograd transform may be performed offline. This is described below by using examples.

The second forward winograd transform includes third forward winograd transform and fourth forward winograd transform. The neural network accelerator further includes the storage module, and the storage module is configured to store a first transformation result of performing the third forward winograd transform on the convolution kernel by using the third matrix. The matrix transform unit is specifically configured to perform the fourth forward winograd transform on the first transformation result by using a fourth matrix, to obtain a transformed convolution kernel. The third matrix and the fourth matrix are matrices obtained after a transformation matrix of the second forward winograd transform is decomposed, a value of an element in the third matrix is 0 or ±1, and the fourth matrix is a matrix other than the third matrix in the matrices obtained after decomposition. The following uses an example for description. G × K × *G^{T}* = V may be converted into a formula 2-4: $V = G \times K \times {G}^{T} = GL \times \left(GR\times K\times {GR}^{T}\right) \times {GL}^{T} = GL \times Wm \times {GL}^{T}$

*Wm* = GR × K × *GR^{T}* may be performed offline, and this result may be prestored in the storage module, and *GL* × *Wm* × *GL^{T}* may be performed on a chip. A transformation matrix G of the second forward winograd transform is split into a 3 × 3 matrix GR (2-5) and a 4 × 3 matrix GL (2-6). It should be noted that there may be another splitting manner, to ensure that all elements in one matrix in transformation matrices obtained after splitting are 0 or ±1. $GR = \left[\begin{matrix}1 & 0 & 0 \\ - 0.5 & 0.5 & 0.5 \\ 0.5 & - 0.5 & 0.5\end{matrix}\right]$ $GL = \left[\begin{matrix}1 & 0 & 0 \\ 1 & 1 & 0 \\ 0 & 0 & 1 \\ 0 & 1 & 01\end{matrix}\right]$

To meet a requirement of a convolution operation of a fixed point number, the solution provided in this application may support de-quantization and quantization processing. In a possible implementation, the vector operation module may support de-quantization (De-quantization) and quantization (Quantization) operations, to meet a requirement of an operation of a fixed point number. De-quantization may be used to convert a fixed-point number into a floating point number or another fixed point number that facilitates an operation of the vector operation module, for example, s32->f16 and s32->s16. Quantization is used to convert a result of the vector operation module after reordering into a fixed point number input of a next-layer operation, for example, s16->s8 and f16->s8. In a possible implementation, de-quantization may be performed before inverse winograd transform, and quantization may be performed after inverse winograd transform. A de-quantization process may be performed before an inverse transform operation, so that a bit width can be reduced and computing power is greater. It should be noted that specific manners of quantization and de-quantization are not limited in this embodiment of this application.

FIG. 12 is a schematic diagram of a structure of an accelerator according to this application. The accelerator provided in this application is based on a conventional matrix operation module and a conventional vector operation module, and a winograd algorithm is applied to an acceleration algorithm of a neural network through less architecture modification. The accelerator performs, by using a traversal unit and a matrix transform unit, traversal processing and forward winograd transform processing on an input feature map obtained by an obtaining unit, to output 16 first matrices. The accelerator performs forward winograd transform processing on a convolution kernel by using the matrix transform unit, to output 16 second matrices. A manner and a principle of obtaining the first matrices and the second matrices are described above, and details are not described herein again. 16 independent matrix multiplication operations are performed in the matrix operation module, to generate 16 multiplication results. In the vector operation module, inverse winograd transform processing is performed on the 16 multiplication results, to generate four matrix results, and finally post-processing is performed by using the vector operation module. The post-processing includes a data rearrangement operation, a summation operation, or an accumulated sum operation. If the input feature map is processed at a convolutional layer, a rearrangement operation may be performed on data by using a data migration function of the vector operation module, to obtain an output image feature. If the input feature map is processed at a pooling layer, a summation operation or an accumulated sum operation may be performed on data to obtain an image feature of an output image. In addition, the accelerator supports different data formats such as a floating point and a fixed point. When a fixed point operation is used in a calculation process, the vector operation module may perform de-quantization and quantization (Quantization) operations, to support a convolution operation of a fixed point number.

In a possible implementation, an offset operation may be performed on at least one multiplication result. In the solution provided in this application, performing an offset operation on a multiplication result may be equivalent to performing an offset operation on an output feature map. This is proved as follows: ${A}^{T} \times \left(\left[\begin{matrix}S 1 & S 2 & S 3 & S 4 \\ S 5 & S 6 & S 7 & S 8 \\ S 9 & S 10 & S 11 & S 12 \\ S 13 & S 14 & S 15 & S 16\end{matrix}\right]+c\right) \times A = \left[\begin{matrix}Q 1 & Q 2 \\ Q 3 & Q 4\end{matrix}\right] + b$

In the foregoing formula, b represents an offset, and one value $\left[\begin{matrix}0 & 0 & 0 & 0 \\ 0 & b & 0 & 0 \\ 0 & 0 & 0 & 0 \\ 0 & 0 & 0 & 0\end{matrix}\right]$ of c may be obtained according to the formula 2-7.

It can be learned that performing an offset operation on a fifth multiplication result may be equivalent to performing an offset operation on the output feature map. FIG. 13 is a schematic diagram of a possible manner of performing an offset operation on a multiplication result. Performing an offset operation on a multiplication result may be equivalent to performing an offset operation on an output feature map.

In a possible implementation, to reduce a calculator time of the accelerator, operations in the matrix transform unit and the vector operation module may be on-the-fly calculations. For example, a function of the matrix transform unit may be fixed into an instruction for invocation. The matrix transform unit may be included in a process of transferring data from an upper-layer memory to the matrix operation module, that is, in a process of transferring data stored in the upper-layer memory to the matrix operation module, to process the data. A processing process is understood with reference to an operation performed by the matrix transform unit. For another example, an offset operation, a de-quantization operation, or a part of inverse winograd transform of the vector operation module may be completed by through on-the-fly calculation. FIG. 14 is a schematic diagram of a location of an on-the-fly calculation in an entire operation procedure in the solution provided in this application. As shown in FIG. 14, an offset operation, a de-quantization operation, or a part of inverse winograd transform may be completed through on-the-fly calculation in a process of transferring from the matrix operation module to the vector operation module.

In a possible implementation, as shown in FIG. 15, the matrix transform unit, the matrix operation module, and the vector operation module may act in parallel as pipelining, to improve operation efficiency. To be specific, the matrix transform unit obtains some results of forward winograd transform, and may send the results to the matrix operation module, so that the matrix operation module obtains some multiplication results. After obtaining the multiplication results, the matrix operation unit may send the multiplication results to the vector operation unit, so that the vector operation unit may perform inverse winograd transform on the multiplication results. As described above, a quantity of matrices output by the matrix transform unit each time may be determined based on a bandwidth and the storage amount of the matrix operation unit, and one or more first matrices or second matrices are output each time. Details are not described herein again. For example, the following provides a description with reference to pseudocode. It is assumed that a size of an input feature map is 56 × 56 × k, and a size of a convolution kernel is 3 × 3 × k × n. The following is pseudocode when the matrix transform unit outputs only four first matrices and four second matrices each time:

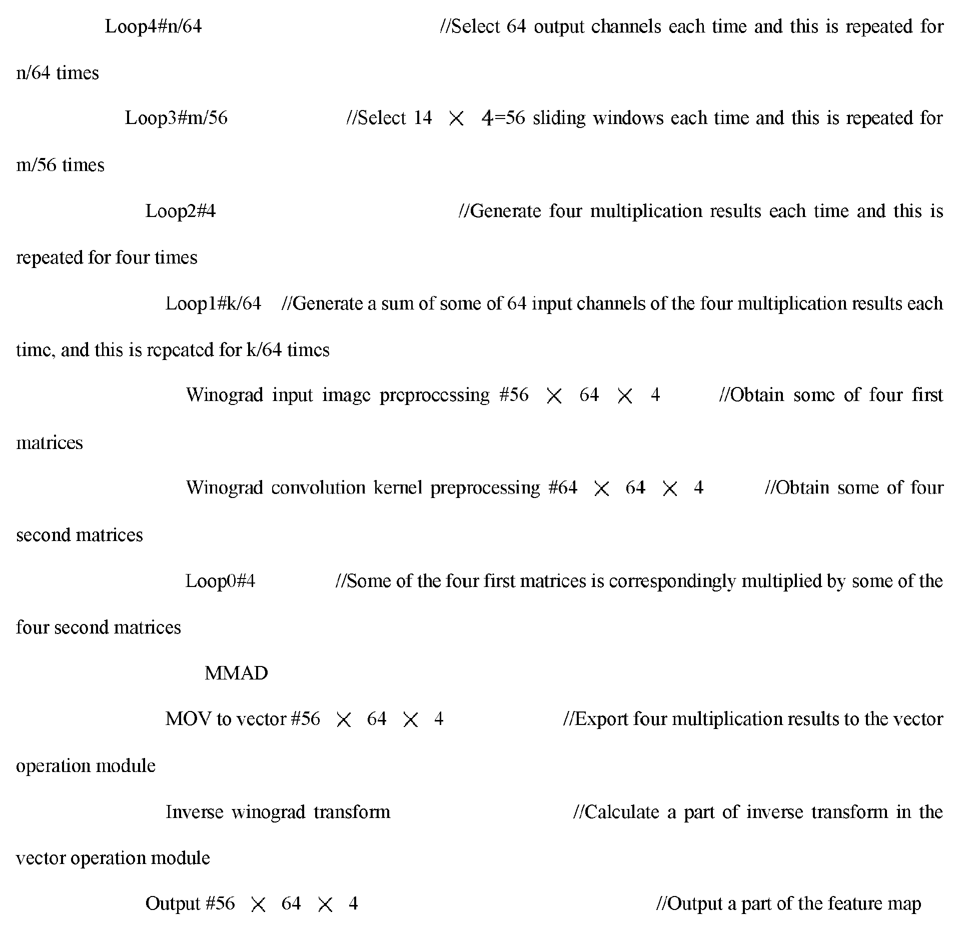

FIG. 16 is a schematic diagram showing that in consideration of an actual bandwidth and the storage amount of the matrix operation module, block division processing is performed on an input feature map and a convolution kernel, to obtain an output feature map by performing a plurality of operations. A specific process may be understood with reference to the pseudocode, and details are not described herein again.

An embodiment of this application further provides an acceleration method. The acceleration method may include the following steps: performing first forward winograd transform on a target matrix corresponding to an input feature map, to obtain a transformed target matrix; performing second forward winograd transform on a convolution kernel, to obtain a transformed convolution kernel; performing a matrix multiplication operation on a first matrix and a second matrix, to obtain a multiplication result, where the first matrix is constructed based on the transformed target matrix, and the second matrix is constructed based on the transformed convolution kernel; and performing inverse winograd transform on the multiplication result, to obtain an output feature map.

In a possible implementation, the method further includes: performing a padding padding operation on the input feature map, so that a size of the input feature map is W×H×k, where W and H each are an even number not less than 4, k is an integer greater than 1, W is a row of the input feature map, H is a column of the input feature map, and k is a quantity of channels of the input feature map. The input feature map is traversed by using a sliding window whose stride is 2 and whose size is 4×4, to obtain (((W - 2)(H - 2)/4) × k) target matrices.

In a possible implementation, a padding padding operation is performed on the input feature map, so that the size of the input feature map is W×H×k, where W and H each are an even number not less than 4, k is an integer greater than 1, W is the row of the input feature map, H is the column of the input feature map, and k is the quantity of channels of the input feature map. The input feature map is traversed by using the sliding window whose stride is 2 and whose size is 4×4, to obtain (((W - 2)(H - 2)/4) × k) target matrices.

In a possible implementation, a size of the convolution kernel is 3 ×3×k×n, a stride of the convolution kernel is 1, n is a quantity of channels of the output feature map, and n is an integer greater than 1.

In a possible implementation, the first matrix includes an i^{th} element in the transformed target matrix, i is a positive integer not greater than 16, the first matrix is a matrix with m rows and k columns, and m is equal to ((W - 2)(H - 2)/4). The second matrix includes an i^{th} element in the transformed convolution kernel, and the second matrix is a matrix with K rows and n columns. The multiplication result is used to determine the output feature map.

In a possible implementation, the performing inverse winograd transform on the multiplication result, to obtain an output feature map includes: performing the inverse winograd transform on the multiplication result to obtain a third matrix; and reordering elements in the third matrix by using a preset reordering rule, to obtain the output feature map.

In a possible implementation, the performing inverse winograd transform on the multiplication result, to obtain an output feature map includes: performing the inverse winograd transform on the multiplication result to output a third matrix; and performing a summation operation on elements in the third matrix, to obtain the output feature map.

In a possible implementation, the second forward winograd transform includes third forward winograd transform and fourth forward winograd transform, and the performing second forward winograd transform on a convolution kernel whose size is 3 ×3×k×n and whose stride is 1, to obtain a transformed convolution kernel includes: performing the third forward winograd transform on the convolution kernel by using the third matrix, to obtain a first transformation result; and performing the fourth forward winograd transform on the first transformation result by using a fourth matrix, to obtain the transformed convolution kernel, where the third matrix and the fourth matrix are matrices obtained after a transformation matrix of the second forward winograd transform is decomposed, a value of an element in the third matrix is 0 or ±1, and the fourth matrix is a matrix other than the third matrix in the matrices obtained after decomposition.

In a possible implementation, the method further includes: obtaining M elements of a plurality of transformed target matrices, where M is an integer greater than 1; processing the M elements according to a first preset formula, to output a plurality of first matrices; obtaining N elements of a plurality of transformed convolution kernels, where N is an integer greater than 1; and processing the N elements according to a second preset formula, to output a plurality of second matrices.

In a possible implementation, the method further includes: performing an offset operation on a multiplication result.

An embodiment of this application further provides a computer-readable storage medium. The computer-readable storage medium stores a program used for acceleration. When the program is run on a computer, the computer is enabled to perform the steps performed by the neural network accelerator described in the embodiments shown in FIG. 3-a to FIG. 15.

The neural network accelerator in this application may also be implemented by using a digital processing chip or a chip. The chip includes a processing unit and a communication interface. The processing unit obtains program instructions through the communication interface, the program instructions are executed by the processing unit, and the processing unit is configured to perform the method steps performed by the neural network accelerator shown in any embodiment in FIG. 3-a or FIG. 15.

An embodiment of this application further provides a digital processing chip. The digital processing chip implements, based on program code stored in an external memory, the actions performed by the neural network accelerator in the foregoing embodiments.

An embodiment of this application further provides a computer program product. When the computer program product runs on a computer, the computer is enabled to perform the steps performed by the neural network accelerator in the methods described in the embodiments shown in FIG. 3-a to FIG. 15.

The neural network accelerator provided in this embodiment of this application may be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable a chip in a server to perform the steps performed by the neural network accelerator described in the embodiments shown in FIG. 3-a to FIG. 15. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

Specifically, the processing unit or the processor is a network processing unit (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. A general-purpose processor may be a microprocessor, any regular processor, or the like.

FIG. 17 is a schematic diagram of a structure of a chip according to an embodiment of this application. The chip may be represented as a neural network processor NPU. The NPU is mounted to a host CPU (Host CPU) as a coprocessor, and the host CPU allocates a task to the NPU. A core part of the NPU is a matrix operation module 302, and a controller 308 controls the matrix operation module 302 to extract matrix data in a memory and perform a multiplication operation. It should be noted that the controller 308 may further control another module in the NPU.

Steps specifically performed by the matrix operation module 302 may be understood with reference to the steps performed by the matrix operation module 302 described in any embodiment in FIG. 3-a to FIG. 15.

The chip further includes a preprocessing module 301. Specific steps performed by the preprocessing module may be understood with reference to the steps performed by the preprocessing module described in any embodiment in FIG. 3-a to FIG. 15. For example, for understanding, refer to the actions performed by the obtaining unit 3011, the traversal unit 3012, and the matrix transform unit 3013 in FIG. 3-a to FIG. 15.

A bus interface unit (bus interface unit, BIU) 310 is used for interaction between an AXI bus and a DMAC and between the AXI bus and an instruction fetch buffer (Instruction Fetch Buffer, IFB) 309.

The bus interface unit (bus interface unit, BIU) 310 is used by the instruction fetch buffer 309 to obtain instructions from an external memory, and is further used by a storage unit access controller 306 to obtain original data of an input matrix A or a weight matrix B from the external memory.

Steps specifically performed by a vector operation module 303 may be understood with reference to the steps performed by the vector operation module 303 described in any embodiment in FIG. 3-a to FIG. 15.

In some implementations, the vector operation module 303 can store a processed output vector in a unified memory 307. For example, the vector operation module 303 may apply a linear function and/or a non-linear function to an output of the matrix operation module 302, for example, perform linear interpolation on a feature plane extracted at a convolutional layer, and for another example, obtain an accumulated value vector, to generate an activation value. In some implementations, the vector operation unit 303 generates a normalized value, a pixel-level summation value, or both. In some implementations, the processed output vector can be used as an activation input of the matrix operation module 302, for example, used at a subsequent layer in a neural network.

The instruction fetch buffer (instruction fetch buffer) 309 connected to the controller 308 is configured to store an instruction used by the controller 308.

The unified memory 307, an input memory 305, a weight memory 304, and the instruction fetch buffer 309 each are an on-chip memory. The external memory is private for a hardware architecture of the NPU.

An operation at each layer in a recurrent neural network may be performed by the matrix operation module 302 or the vector operation module 303.

Any processor mentioned above may be a general-purpose central processing unit, a microprocessor, an ASIC, or one or more integrated circuits configured to control program execution of the methods in FIG. 3-a to FIG. 15.

A data stream indicates obtaining data, which may include an input feature map and a weight, from the external memory by using the bus interface unit 310, and storing the obtained data in the unified memory. The storage unit access controller controls the unified memory, so that data in the unified memory is transmitted to the matrix transform unit, data output by the matrix transform unit is transmitted to the weight memory 304 and the input memory, the weight memory 304 and the input memory output data to the matrix operation module, data output by the matrix operation module is transmitted to the vector operation module, an output result of the vector operation module is stored in the unified memory, and the result can be output to an external bus.

In addition, it should be noted that the described apparatus embodiments are merely examples. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary dedicated hardware, including a dedicated integrated circuit, a dedicated memory, a dedicated component. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a dedicated computer, a or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

## Claims

1. A neural network accelerator, comprising:
a preprocessing module (301), configured to perform first forward winograd transform on a target matrix corresponding to an input feature map, to obtain a transformed target matrix, wherein
the preprocessing module (301) is further configured to perform second forward winograd transform on a convolution kernel, to obtain a transformed convolution kernel;
a matrix operation module (302), configured to perform a matrix multiplication operation on a first matrix and a second matrix, to obtain a multiplication result, wherein the first matrix is constructed based on the transformed target matrix, and the second matrix is constructed based on the transformed convolution kernel; and
a vector operation module (303), configured to perform inverse winograd transform on the multiplication result, to obtain an output feature map,
wherein the vector operation module (303) is specifically configured to:
perform the inverse winograd transform on the multiplication result, to obtain a third matrix; and
perform a maximization operation on elements in the third matrix, to obtain the output feature map.

2. The neural network accelerator according to claim 1, wherein the preprocessing module (301) is further configured to:
traverse the input feature map by using a sliding window, to obtain the target matrix corresponding to the input feature map.

3. The neural network accelerator according to claim 2, wherein the input feature map is an input feature map on which a padding operation is performed, a size of the input feature map is W×H×k, W and H each are an even number not less than 4, k is an integer greater than 1, W is a row of the input feature map, H is a column of the input feature map, and k is a quantity of channels of the input feature map; and
the preprocessing module (301) is specifically configured to traverse the input feature map by using a sliding window whose stride is 2 and whose size is 4×4, to obtain (((W - 2)(H - 2)/4) × k) target matrices.

4. The neural network accelerator according to claim 3, wherein a size of the convolution kernel is 3 ×3×k×n, a stride of the convolution kernel is 1, n is a quantity of channels of the output feature map, and n is an integer greater than 1.

5. The neural network accelerator according to claim 4, wherein the first matrix comprises an i^{th} element in the transformed target matrix, i is a positive integer not greater than 16, the first matrix is a matrix with m rows and k columns, m is equal to ((W - 2)(H - 2)/4), the second matrix comprises an i^{th} element of the transformed convolution kernel, and the second matrix is a matrix with K rows and n columns.

6. An acceleration method executed by a neural network accelerator, comprising:
performing first forward winograd transform on a target matrix corresponding to an input feature map, to obtain a transformed target matrix;
performing second forward winograd transform on a convolution kernel, to obtain a transformed convolution kernel;
performing a matrix multiplication operation on a first matrix and a second matrix, to obtain a multiplication result, wherein the first matrix is constructed based on the transformed target matrix, and the second matrix is constructed based on the transformed convolution kernel; and
performing inverse winograd transform on the multiplication result, to obtain an output feature map,
wherein the performing inverse winograd transform on the multiplication result, to obtain an output feature map comprises:
performing the inverse winograd transform on the multiplication result, to obtain a third matrix; and
performing a maximization operation on elements in the third matrix, to obtain the output feature map.

7. The acceleration method according to claim 6, wherein the method further comprises:
traversing the input feature map by using a sliding window, to obtain the target matrix corresponding to the input feature map.

8. The acceleration method according to claim 7, wherein the method further comprises:
the input feature map is an input feature map on which a padding operation is performed, a size of the input feature map is W×H×k, W and H each are an even number not less than 4, k is an integer greater than 1, W is a row of the input feature map, H is a column of the input feature map, and k is a quantity of channels of the input feature map; and
traversing the input feature map by using a sliding window whose stride is 2 and whose size is 4×4, to obtain (((W - 2) (H - 2)/4) × k) target matrices.

9. The acceleration method according to claim 8, wherein a size of the convolution kernel is 3×3×k×n, a stride of the convolution kernel is 1, n is a quantity of channels of the output feature map, and n is an integer greater than 1.

10. The acceleration method according to claim 9, wherein the first matrix comprises an i^{th} element in the transformed target matrix, i is a positive integer not greater than 16, the first matrix is a matrix with m rows and k columns, m is equal to ((W - 2)(H - 2)/4), the second matrix comprises an i^{th} element of the transformed convolution kernel, the second matrix is a matrix with K rows and n columns, and the multiplication result is used to determine the output feature map.

11. A neural network accelerator implemented as a chip system, wherein the chip system comprises a processor and a communication interface, the processor obtains program instructions through the communication interface, wherein the processor is a neural-network processing unit, a graphics processing unit, a digital signal processor, an application-specific integrated circuit, a field programmable gate array or a programmable logic device, and when the program instructions are executed by the processor, the neural network accelerator is configured to executed any of claims 6 to 10.

## Patentansprüche

1. Beschleuniger eines neuronalen Netzes, umfassend:
ein Vorverarbeitungsmodul (301), das dazu konfiguriert ist, eine erste Vorwärts-Winograd-Transformation auf einer Zielmatrix durchzuführen, die einer Eingabe-Feature-Map entspricht, um eine transformierte Zielmatrix zu erlangen, wobei
das Vorverarbeitungsmodul (301) ferner dazu konfiguriert ist, eine zweite Vorwärts-Winograd-Transformation auf einem Faltungskernel durchzuführen, um einen transformierten Faltungskernel zu erlangen;
ein Matrixoperationsmodul (302), das dazu konfiguriert ist, eine Matrixmultiplikationsoperation auf einer ersten Matrix und einer zweiten Matrix durchzuführen, um ein Multiplikationsergebnis zu erlangen, wobei die erste Matrix basierend auf der transformierten Zielmatrix konstruiert ist und die zweite Matrix basierend auf dem transformierten Faltungskernel konstruiert ist; und
ein Vektoroperationsmodul (303), das dazu konfiguriert ist, eine inverse Winograd-Transformation auf dem Multiplikationsergebnis durchzuführen, um eine Ausgabe-Feature-Map zu erlangen,
wobei das Vektoroperationsmodul (303) insbesondere zu Folgendem konfiguriert ist:
Durchführen der inversen Winograd-Transformation auf dem Multiplikationsergebnis, um eine dritte Matrix zu erlangen; und
Durchführen einer Maximierungsoperation auf Elementen in der dritten Matrix, um die Ausgabe-Feature-Map zu erlangen.

2. Beschleuniger eines neuronalen Netzes nach Anspruch 1, wobei das Vorverarbeitungsmodul (301) ferner zu Folgendem konfiguriert ist:
Durchlaufen der Eingabe-Feature-Map unter Verwendung eines Schiebefensters, um die Zielmatrix, die der Eingabe-Feature-Map entspricht, zu erlangen.

3. Beschleuniger eines neuronalen Netzes nach Anspruch 2, wobei die Eingabe-Feature-Map eine Eingabe-Feature-Map ist, auf der eine Padding-Operation durchgeführt wird, eine Größe der Eingabe-Feature-Map W×H×k beträgt, W und H jeweils eine gerade Zahl nicht kleiner als 4 sind, k eine Ganzzahl größer als 1 ist, W eine Zeile der Eingabe-Feature-Map ist, H eine Spalte der Eingabe-Feature-Map ist und k eine Anzahl von Kanälen der Eingabe-Feature-Map ist; und
das Vorverarbeitungsmodul (301) insbesondere dazu konfiguriert ist, die Eingabe-Feature-Map unter Verwendung eines Schiebefensters zu durchlaufen, dessen Schrittweite 2 beträgt und dessen Größe 4×4 beträgt, um (((W - 2)(H - 2)/4) × k) Zielmatrizen zu erlangen.

4. Beschleuniger eines neuronalen Netzes nach Anspruch 3, wobei eine Größe des Faltungskernels 3×3×k×n beträgt, eine Schrittweite des Faltungskernels 1 beträgt, n eine Anzahl von Kanälen der Ausgabe-Feature-Map ist und n eine Ganzzahl größer als 1 ist.

5. Beschleuniger eines neuronalen Netzes nach Anspruch 4, wobei die erste Matrix ein i-tes Element in der transformierten Zielmatrix umfasst, i eine positive Ganzzahl nicht größer als 16 ist, die erste Matrix eine Matrix mit m Zeilen und k Spalten ist, m gleich ((W - 2)(H - 2)/4) ist, die zweite Matrix ein i-tes Element des transformierten Faltungskernels umfasst und die zweite Matrix eine Matrix mit K Zeilen und n Spalten ist.

6. Beschleunigungsverfahren, das durch einen neuronalen Netzbeschleuniger ausgeführt wird, umfassend:
Durchführen einer ersten Vorwärts-Winograd-Transformation auf einer Zielmatrix, die einer Eingabe-Feature-Map entspricht, um eine transformierte Zielmatrix zu erlangen;
Durchführen einer zweiten Vorwärts-Winograd-Transformation auf einem Faltungskernel, um einen transformierten Faltungskernel zu erlangen;
Durchführen einer Matrixmultiplikationsoperation auf einer ersten Matrix und einer zweiten Matrix, um ein Multiplikationsergebnis zu erlangen, wobei die erste Matrix basierend auf der transformierten Zielmatrix konstruiert ist und die zweite Matrix basierend auf dem transformierten Faltungskernel konstruiert ist; und
Durchführen einer inversen Winograd-Transformation auf dem Multiplikationsergebnis, um eine Ausgabe-Feature-Map zu erlangen,
wobei das Durchführen einer inversen Winograd-Transformation auf dem Multiplikationsergebnis, um eine Ausgabe-Feature-Map zu erlangen, Folgendes umfasst:
Durchführen der inversen Winograd-Transformation auf dem Multiplikationsergebnis, um eine dritte Matrix zu erlangen; und
Durchführen einer Maximierungsoperation auf Elementen in der dritten Matrix, um die Ausgabe-Feature-Map zu erlangen.

7. Beschleunigungsverfahren nach Anspruch 6, wobei das Verfahren ferner Folgendes umfasst:
Durchlaufen der Eingabe-Feature-Map unter Verwendung eines Schiebefensters, um die Zielmatrix, die der Eingabe-Feature-Map entspricht, zu erlangen.

8. Beschleunigungsverfahren nach Anspruch 7, wobei das Verfahren ferner Folgendes umfasst:
die Eingabe-Feature-Map ist eine Eingabe-Feature-Map, auf der eine Padding-Operation durchgeführt wird, eine Größe der Eingabe-Feature-Map beträgt W×H×k, W und H sind jeweils eine gerade Zahl nicht kleiner als 4, k ist eine Ganzzahl größer als 1, W ist eine Zeile der Eingabe-Feature-Map, H ist eine Spalte der Eingabe-Feature-Map und k ist eine Anzahl von Kanälen der Eingabe-Feature-Map; und
Durchlaufen der Eingabe-Feature-Map unter Verwendung eines Schiebefensters, dessen Schrittweite 2 beträgt und dessen Größe 4×4 beträgt, um (((W - 2)(H - 2)/4) × k) Zielmatrizen zu erlangen.

9. Beschleunigungsverfahren nach Anspruch 8, wobei eine Größe des Faltungskernels 3×3×k×n beträgt, eine Schrittweite des Faltungskernels 1 beträgt, n eine Anzahl von Kanälen der Ausgabe-Feature-Map ist und n eine Ganzzahl größer als 1 ist.

10. Beschleunigungsverfahren nach Anspruch 9, wobei die erste Matrix ein i-tes Element in der transformierten Zielmatrix umfasst, i eine positive Ganzzahl nicht größer als 16 ist, die erste Matrix eine Matrix mit m Zeilen und k Spalten ist, m gleich ((W - 2)(H - 2)/4) ist, die zweite Matrix ein i-tes Element des transformierten Faltungskernels umfasst, die zweite Matrix eine Matrix mit K Zeilen und n Spalten ist und das Multiplikationsergebnis dazu verwendet wird, die Ausgabe-Feature-Map zu bestimmen.

11. Beschleuniger eines neuronalen Netzes, der als ein ChipSystem implementiert ist,
wobei das Chipsystem einen Prozessor und eine Kommunikationsschnittstelle umfasst, der Prozessor Programmanweisungen über die Kommunikationsschnittstelle erlangt, wobei der Prozessor eine Verarbeitungseinheit eines neuronalen Netzes, eine Grafikverarbeitungseinheit, ein digitaler Signalprozessor, ein anwendungsspezifischer integrierter Schaltkreis, ein feldprogrammierbares Gate-Array oder eine programmierbare logische Schaltung ist und, wenn die Programmanweisungen durch den Prozessor ausgeführt werden, der Beschleuniger eines neuronalen Netzes dazu konfiguriert ist, einen der Ansprüche 6 bis 10 auszuführen.

## Revendications

1. Accélérateur de réseau neuronal, comprenant :
un module de prétraitement (301), configuré pour réaliser une première transformation de Winograd directe sur une matrice cible correspondant à une carte de caractéristiques d'entrée, pour obtenir une matrice cible transformée, dans lequel
le module de prétraitement (301) est en outre configuré pour réaliser une seconde transformation de Winograd directe sur un noyau de convolution, pour obtenir un noyau de convolution transformé ;
un module d'opération matricielle (302), configuré pour réaliser une opération de multiplication matricielle sur une première matrice et une deuxième matrice, pour obtenir un résultat de multiplication, dans lequel la première matrice est construite sur la base de la matrice cible transformée, et la deuxième matrice est construite sur la base du noyau de convolution transformé ; et
un module d'opération vectorielle (303), configuré pour réaliser une transformation de Winograd inverse sur le résultat de multiplication, pour obtenir une carte de caractéristiques de sortie,
dans lequel le module d'opération vectorielle (303) est spécifiquement configuré pour :
réaliser la transformation de Winograd inverse sur le résultat de multiplication, pour obtenir une troisième matrice ; et
réaliser une opération de maximisation sur des éléments dans la troisième matrice, pour obtenir la carte de caractéristiques de sortie.

2. Accélérateur de réseau neuronal selon la revendication 1, dans lequel le module de prétraitement (301) est en outre configuré pour :
parcourir la carte de caractéristiques d'entrée à l'aide d'une fenêtre glissante, pour obtenir la matrice cible correspondant à la carte de caractéristiques d'entrée.

3. Accélérateur de réseau neuronal selon la revendication 2, dans lequel la carte de caractéristiques d'entrée est une carte de caractéristiques d'entrée sur laquelle une opération de remplissage est réalisée, une taille de la carte de caractéristiques d'entrée est W× H× k, W et H sont chacun un nombre pair non inférieur à 4, k est un entier supérieur à 1, W est une ligne de la carte de caractéristiques d'entrée, H est une colonne de la carte de caractéristiques d'entrée et k est une quantité de canaux de la carte de caractéristiques d'entrée ; et
le module de prétraitement (301) est spécifiquement configuré pour parcourir la carte de caractéristiques d'entrée à l'aide d'une fenêtre glissante dont le pas est de 2 et dont la taille est de 4× 4, pour obtenir (((W - 2)(H - 2)/ 4) × k) matrices cibles.

4. Accélérateur de réseau neuronal selon la revendication 3, dans lequel une taille du noyau de convolution est de 3× 3× k× n, un pas du noyau de convolution est de 1, n est une quantité de canaux de la carte de caractéristiques de sortie, et n est un entier supérieur à 1.

5. Accélérateur de réseau neuronal selon la revendication 4, dans lequel la première matrice comprend un i^{-ème} élément dans la matrice cible transformée, i est un entier positif non supérieur à 16, la première matrice est une matrice à m lignes et k colonnes, m est égal à ((W - 2)(H - 2)/ 4), la deuxième matrice comprend un i^{-ème} élément du noyau de convolution transformé, et la deuxième matrice est une matrice à K lignes et n colonnes.

6. Procédé d'accélération exécuté par un accélérateur de réseau neuronal, comprenant :
la réalisation d'une première transformation de Winograd directe sur une matrice cible correspondant à une carte de caractéristiques d'entrée, pour obtenir une matrice cible transformée ;
la réalisation d'une seconde transformation de Winograd directe sur un noyau de convolution, pour obtenir un noyau de convolution transformé ;
la réalisation d'une opération de multiplication matricielle sur une première matrice et une deuxième matrice, pour obtenir un résultat de multiplication, dans lequel la première matrice est construite sur la base de la matrice cible transformée, et la deuxième matrice est construite sur la base du noyau de convolution transformé ; et
la réalisation d'une transformation de Winograd inverse sur le résultat de multiplication, pour obtenir une carte de caractéristiques de sortie,
dans lequel la réalisation d'une transformation de Winograd inverse sur le résultat de multiplication, pour obtenir une carte de caractéristiques de sortie, comprend :
la réalisation de la transformation de Winograd inverse sur le résultat de multiplication, pour obtenir une troisième matrice ; et
la réalisation d'une opération de maximisation sur des éléments dans la troisième matrice, pour obtenir la carte de caractéristiques de sortie.

7. Procédé d'accélération selon la revendication 6, dans lequel le procédé comprend en outre :
le parcours de la carte de caractéristiques d'entrée à l'aide d'une fenêtre glissante, pour obtenir la matrice cible correspondant à la carte de caractéristiques d'entrée.

8. Procédé d'accélération selon la revendication 7, dans lequel le procédé comprend en outre :
la carte de caractéristiques d'entrée est une carte de caractéristiques d'entrée sur laquelle une opération de remplissage est réalisée, une taille de la carte de caractéristiques d'entrée est W× H× k, W et H sont chacun un nombre pair non inférieur à 4, k est un entier supérieur à 1, W est une ligne de la carte de caractéristiques d'entrée, H est une colonne de la carte de caractéristiques d'entrée et k est une quantité de canaux de la carte de caractéristiques d'entrée ; et
le parcours de la carte de caractéristiques d'entrée à l'aide d'une fenêtre glissante dont le pas est de 2 et dont la taille est de 4× 4, pour obtenir (((W - 2)(H - 2)/ 4) × k)matrices cibles.

9. Procédé d'accélération selon la revendication 8, dans lequel une taille du noyau de convolution est de 3× 3× k× n, un pas du noyau de convolution est de 1, n est une quantité de canaux de la carte de caractéristiques de sortie, et n est un entier supérieur à 1.

10. Procédé d'accélération selon la revendication 9, dans lequel la première matrice comprend un i-^{ème} élément dans la matrice cible transformée, i est un entier positif non supérieur à 16, la première matrice est une matrice à m lignes et k colonnes, m est égal à ((W - 2)(H - 2)/ 4), la deuxième matrice comprend un i-^{ème} élément du noyau de convolution transformé, la deuxième matrice est une matrice à K lignes et n colonnes et le résultat de multiplication est utilisé pour déterminer la carte de caractéristiques de sortie.

11. Accélérateur de réseau neuronal mis en œuvre sous forme de système sur puce,
dans lequel le système sur puce comprend un processeur et une interface de communication, le processeur obtient des instructions de programme à travers l'interface de communication, dans lequel le processeur est une unité de traitement de réseau neuronal, une unité de traitement graphique, un processeur de signal numérique, un circuit intégré spécifique à une application, un réseau de portes programmables sur site ou un dispositif logique programmable, et lorsque les instructions de programme sont exécutées par le processeur, l'accélérateur de réseau neuronal est configuré pour exécuter l'une quelconque des revendications 6 à 10.
